(19) Europäisches Patentamt
European Patent Office
Office européen des brevets

(11) EP 1 925 640 B1

(12) **EUROPEAN PATENT SPECIFICATION**

(45) Date of publication and mention of the grant of the patent:
**11.08.2010 Bulletin 2010/32**

(21) Application number: **06783218.8**

(22) Date of filing: **07.09.2006**

(51) Int Cl.:
***C08L 69/00*** *(2006.01)*

(86) International application number:
**PCT/JP2006/317761**

(87) International publication number:
**WO 2007/032253 (22.03.2007 Gazette 2007/12)**

(54) **RESIN COMPOSITIONS AND RESIN MOLDINGS**

HARZZUSAMMENSETZUNGEN UND HARZFORMKÖRPER

COMPOSITIONS DE RÉSINE ET MOULAGES DE RÉSINE

(84) Designated Contracting States:
**DE**

(30) Priority: **12.09.2005 JP 2005264290**
**14.09.2005 JP 2005266701**

(43) Date of publication of application:
**28.05.2008 Bulletin 2008/22**

(73) Proprietors:
- **MITSUBISHI CHEMICAL CORPORATION**
**Tokyo 108-0014 (JP)**
- **MITSUBISHI ENGINEERING-PLASTICS CORPORATION**
**Tokyo 105-0021 (JP)**

(72) Inventors:
- **TANAKA, Tomohiko**
**Yokkaichi-shi, Mie 510-8530 (JP)**
- **KASAI, Atsushi**
**Yokkaichi-shi, Mie 510-8530 (JP)**
- **NAKAMURA, Makoto**
**Hiratsuka-shi, Kanagawa 254-0016 (JP)**
- **NAKANO, Hiroshi**
**Hiratsuka-shi, Kanagawa 254-0016 (JP)**

(74) Representative: **HOFFMANN EITLE**
**Patent- und Rechtsanwälte**
**Arabellastrasse 4**
**81925 München (DE)**

(56) References cited:
**JP-A- 54 040 854**
**JP-A- 54 058 754**
**JP-A- 2002 517 538**
**JP-A- 2003 176 401**
**JP-A- 2004 169 009**
**JP-A- 2004 210 889**
**JP-A- 2004 518 008**
**JP-A- 2005 165 085**
**US-B2- 6 635 698**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 925 640 B1

## Description

### TECHNICAL FIELD

The present invention relates to a resin composition and a resin molded product, and more particularly to a resin composition comprising an aromatic polycarbonate and an alicyclic polyester resin as main components, and a resin molded product.

### BACKGROUND ART

Aromatic polycarbonate resins have been extensively used in various application fields including building materials, electric and electronic parts such as chassis or gears for OA equipments, and medical equipments such as Dializer because the resins are excellent in transparency, heat resistance, mechanical strength such as impact strength, and dimensional stability.

In general, the aromatic polycarbonate resins are considered to be deteriorated in chemical resistance. Therefore, it has been attempted that aromatic polyester resins such as polybutylene terephthalate (PBT) and polyethylene terephthalate (PET) are blended in the aromatic polycarbonate resins in order to improve a chemical resistance thereof. These resins have a high affinity to each other but a poor compatibility therebetween. In consequence, these resins have been blended together by utilizing a transesterification reaction therebetween in order to enhance the compatibility. However, when the reaction proceeds excessively, the obtained resin material tends to be deteriorated in heat resistance. On the contrary, when the reaction proceeds insufficiently, there tends to arise such a problem that the obtained resin material is deteriorated in transparency and fails to exhibit a sufficient mechanical strength.

On the other hand, it is known that a poly(1,4-cyclohexanedimethanol-1,4-cyclohexanedicarboxylate) resin (hereinafter refer to merely as "PCC resin") has a good compatibility with the aromatic polycarbonate resins, and a resin composition comprising the PCC resin and the aromatic polycarbonate resin has a high transparency. However, when the PCC resin and the aromatic polycarbonate resin are melted and kneaded to prepare such a resin composition, an transesterification reaction therebetween tends to occur, resulting in production of a transparent but yellow-colored resin composition. Therefore, it is described that a transesterification inhibitor is used to inhibit the resin composition from undergoing undesirable coloration (refer to J. Phys.; Condens. Matter, 8 (1996), pp. 3811-3827).

Also, as the transesterification inhibitor for preventing occurrence of transesterification reaction between the aromatic polycarbonate resin and a certain kind of aromatic polyester resin or alicyclic polyester resin, there are known, for example, acid phosphoric acid salts, specific phosphites, phosphoric acid salts of metals belonging to IB Group or IIB Group of the Periodic Table, oxoacids of phosphorus and acid pyrophosphoric acid metal salts (U.S. Patent No. 5,441,997 and WO 99/63002).

On the other hand, there have been proposed resin compositions containing a certain kind of organic phosphoric ester metal salt. For example, there are known resin compositions comprising a zinc salt of a phosphoric ester containing an alkyl group or an alkenyl group having 10 to 20 carbon atoms and a polyvinyl chloride resin which exhibit a good processability such as low adhesion to heating rolls (Japanese Patent Publication (KOKOKU) No. 54-19422), and resin compositions comprising a polyarylene sulfide resin or a thermoplastic polyester resin, and an organic phosphoric ester metal salt which exhibit a high crystallization velocity and a shortened molding cycle (Japanese Patent Application Laid-open (KOKAI) No. 11-35807). Also, there are known resin compositions containing (a) a polycarbonate and/or a polyester carbonate, (b) a specific graft polymer such as typically ABS resins having a glass transition temperature of less than 10°C, and (c) a metal salt of a phosphoric ester containing an alkyl group having 1 to 24 carbon atoms, a cycloalkyl group having 5 to 6 carbon atoms, an aryl group having 6 to 20 carbon atoms or an aralkyl group having 7 to 12 carbon atoms which are excellent in impact resistance and heat stability (Japanese Patent Application Laid-open (TOKUHYO) No. 2002-509174).

### DISCLOSURE OF THE INVENTION

### PROBLEM TO BE SOLVED BY THE INVENTION

In recent years, in order to sterilize medical equipments, there has been frequently adopted such a sterilization method conducted at 120°C using an autoclave. As a result of the present inventors' study, it has been found that the resin compositions produced by using the above transesterification inhibitor tend to be insufficient in hydrolysis resistance under environmental conditions upon the sterilization, resulting in occurrence of reduction in molecular weight thereof. Thus, medical equipments produced by using the resin compositions having a poor hydrolysis resistance tend to suffer from cracks or ruptures and further from breakage in the worse case.

In addition, as described above, there are known the resin compositions in which the organic phosphoric ester

metal salt is blended. However, it is unknown that the organic phosphoric ester metal salt is blended in resin compositions containing an aromatic polyester resin and an alicyclic polyester resin, whereby a transesterification reaction between these resins as well as coloration of the resin compositions are prevented, and the resin compositions are improved in hydrolysis resistance.

Accordingly, an object of the present invention is to provide a resin composition exhibiting a less coloration which is excellent in transparency, hydrolysis resistance and chemical resistance. Another object of the present invention is to provide a resin composition exhibiting excellent transparency, hue, fluidity, impact resistance, wet-heat resistance and retention heat stability in a well-balanced condition.

MEANS FOR SOLVING THE PROBLEM

That is, in a first aspect of the present invention, there is provided a resin composition comprising:

100 parts by weight of a mixture comprising (A) 1 to 99 parts by weight of an aromatic polycarbonate resin and (B) 1 to 99 parts by weight of an alicyclic polyester resin; and
(C) 0.001 to 5 parts by weight of at least one organic phosphoric ester metal salt selected from the group consisting of organic phosphoric ester metal salts represented by the following general formulae (1), (2), (3) and (4):

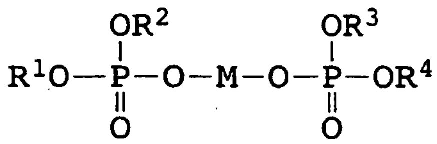

(1)

wherein $R^1$ to $R^4$ are respectively an alkyl group or an aryl group and may be the same or different; and M is a metal selected from the group consisting of alkali earth metals and zinc,

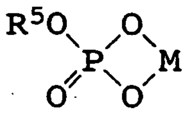

(2)

wherein $R^5$ is an alkyl group or an aryl group; and M is a metal selected from the group consisting of alkali earth metals and zinc,

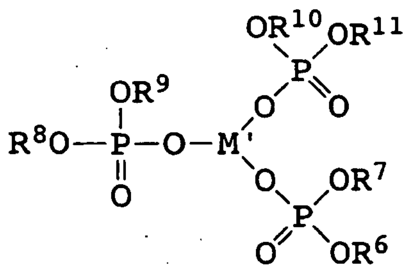

(3)

wherein $R^6$ to $R^{11}$ are respectively an alkyl group or an aryl group and may be the same or different; and M' is a metal atom capable of forming a trivalent metal ion, and

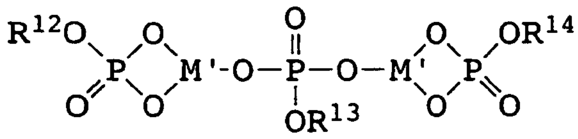

(4)

wherein $R^{12}$ to $R^{14}$ are respectively an alkyl group or an aryl group and may be the same or different; and M' is a metal atom capable of forming a trivalent metal ion and the two M' groups may be the same or different.

In a second aspect of the present invention, there is provided a resin composition comprising:

100 parts by weight of a mixture comprising (A) 1 to 99 parts by weight of an aromatic polycarbonate resin and (B) 1 to 99 parts by weight of an alicyclic polyester resin;
(C) 0.001 to 5 parts by weight of at least one organic phosphoric ester metal salt selected from the group consisting of organic phosphoric ester metal salts represented by the above general formulae (1), (2), (3) and (4); and
(D) 0.001 to 1 part by weight of at least one phosphorus-based compound selected from the group consisting of phosphoric esters represented by the following general formula (5), phosphorous esters represented by the following general formula (6) and phosphonites represented by the following general formula (7):

$$O=P(OH)_n(OH)_{3-n} \quad (5)$$

wherein R is an alkyl group or an aryl group and the plural R groups, if any, may be the same or different; and n is an integer of 0 to 2, and

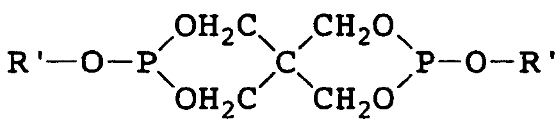

(6)

wherein R' is an alkyl group or an aryl group and the two R' groups may be the same or different, and

$$(R_bO)\ _2PR_a\text{-}R_aP(ORb)_2 \quad (7)$$

wherein $R_a$ is an aryl group or an arylene group; $R_b$ is an alkyl group or an aryl group; and the plural $R_a$ groups and the plural $R_b$ groups may be respectively the same or different.

In a third aspect of the present invention, there is provided a molded product produced by molding any of the above resin compositions.

EFFECT OF THE INVENTION

The resin composition according to the first aspect of the present invention exhibits a less coloration and a high transparency and, therefore, is useful as those resin compositions for production of optical parts, and also exhibits an excellent hydrolysis resistance and a good chemical resistance and, therefore is useful as those resin compositions for production of medical equipments and parts which should be subjected to steam sterilization. In addition, the resin composition according to the second aspect of the present invention exhibits excellent transparency, hue, fluidity, impact resistance, wet-heat resistance and retention heat stability in a well-balanced condition.

PREFERRED EMBODIMENTS FOR CARRYING OUT THE INVENTION

The present invention is described in detail below. However, the following descriptions are concerned with only typical embodiments of the present invention, and not intended to limit the scope of the present invention. In the present specification, the "groups" contained in various compounds may have a substituent group unless inclusion of the substituent group departs from the scope of the present invention. Meanwhile, the inventions according to the first and

second aspects of the present invention are hereinafter referred to merely as the "first invention" and the "second invention", respectively.

The essential components which are common to the first and second inventions are the following three components, i.e., the aromatic polycarbonate resin (A), the alicyclic polyester resin (B) and the specific organic phosphoric ester metal salt (C). The resin composition of the second invention further include, in addition to the above three components, the specific phosphorus-based compound (D) as an essential component.

First, the essential components as well as optional components used in the first and second inventions are explained.

<Aromatic polycarbonate resin (A)>

The aromatic polycarbonate resin (A) used in the present invention may be produced by using an aromatic dihydroxy compound and a carbonate precursor, or using these compounds together with a small amount of a polyhydroxy compound, as raw materials, and may be in the form of a linear or branched thermoplastic polymer or copolymer.

Examples of the aromatic dihydroxy compound may include bis(hydroxyaryl)alkanes such as 2,2-bis(4-hydroxyphenyl)propane (= bisphenol A), 2,2-bis(3,5-dibromo-4-hydroxyphenyl)propane (= tetrabromobisphenol A), bis(4-hydroxyphenyl)methane, 1,1-bis(4-hydroxyphenyl)ethane, 2,2-bis(4-hydroxyphenyl)butane, 2,2-bis(4-hydroxyphenyl)octane, 2,2-bis(4-hydroxy-3-methylphenyl)propane, 1,1-bis(3-tert-butyl-4-hydroxyphenyl)propane, 2,2-bis(4-hydroxy-3,5-dimethylphenyl)propane, 2,2-bis(3-bromo-4-hydroxyphenyl)propane, 2,2-bis(3,5-dichloro-4-hydroxyphenyl)propane, 2,2-bis(3-phenyl-4-hydroxyphenyl)propane, 2,2-bis(3-cyclohexyl-4-hydroxyphenyl)propane, 1,1-bis(4-hydroxyphenyl)-1-phenylethane, bis(4-hydroxyphenyl)diphenylmethane, 2,2-bis(4-hydroxyphenyl)-1,1,1-trichloropropane, 2,2-bis(4-hydroxyphenyl)-1,1,1,3,3,3-hexachloropropane and 2,2-bis(4-hydroxyphenyl)-1,1,1,3,3,3-hexafluoropropane.

Examples of the other aromatic dihydroxy compounds than those described above include bis(hydroxyaryl) cycloalkanes such as 1,1-bis(4-hydroxyphenyl)cyclopentane, 1,1-bis(4-hydroxyphenyl)cyclohexane and 1,1-bis(4-hydroxyphenyl)-3,3,5-trimethylcyclohexane; bisphenols having a cardo structure such as 9,9-bis(4-hydroxyphenyl)fluorene and 9,9-bis(4-hydroxy-3-methylphenyl)fluorene; dihydroxydiaryl ethers such as, for example, 4,4'-dihydroxydiphenyl ether and 4,4'-dihydroxy-3,3'-dimethyldiphenyl ether; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; dihydroxydiaryl sulfones such as 4,4'-dihydroxydiphenyl sulfone and 4,4'-dihydroxy-3,3'-dimethyldiphenyl sulfone; hydroquinone; resorcin; and 4,4'-dihydroxydiphenyl.

Among the above aromatic dihydroxy compounds, preferred are bis(4-hydroxyphenyl)alkanes, and more preferred is 2,2-bis(4-hydroxyphenyl)propane [=bisphenol A] from the viewpoint of good impact resistance of the resultant composition. These aromatic dihydroxy compounds may be used in combination of any two or more thereof.

Examples of the above carbonate precursor include carbonyl halides, carbonic acid esters and haloformates. Specific examples of the carbonate precursor include phosgene; diaryl carbonates such as diphenyl carbonate and ditolyl carbonate; dialkyl carbonates such as dimethyl carbonate and diethyl carbonate; and dihaloformates of dihydric phenols. These carbonate precursors may be used in combination of any two or more thereof.

Also, the aromatic polycarbonate resin used in the present invention may be in the form of a branched aromatic polycarbonate resin obtained by copolymerizing a tri- or more polyfunctional aromatic compound therewith. Examples of the tri- or more polyfunctional aromatic compound include polyhydroxy compounds such as fluoroglucin, 4,6-dimethyl-2,4,6-tri(4-hydroxyphenyl)heptene-2, 4,6-dimethyl-2,4,6-tri(4-hydroxyphenyl)heptane, 2,6-dimethyl-2,4,6-tri(4-hydroxyphenyl)heptene-3, 1,3,5-tri(4-hydroxyphenyl)benzene and 1,1,1-tri(4-hydroxyphenyl)ethane; 3,3-bis(4-hydroxyaryl)oxyindole (= isatin bisphenol); 5-chloroisatin; 5,7-dichloroisatin; and 5-bromoisatin. Among these polyfunctional aromatic compounds, preferred is 1,1,1-tri(4-hydroxyphenyl)ethane. The polyfunctional aromatic compound may be replaced with a part of the above aromatic dihydroxy compound. The amount of the polyhydroxy aromatic compound used is usually 0.01 to 10 mol% and preferably 0.1 to 2 mol% on the basis of the aromatic dihydroxy compound.

As the method for producing the aromatic polycarbonate resin, there may be used an interfacial polymerization method, a melting transesterification method, a pyridine method, a ring-opening polymerization method of cyclic carbonate compounds, and a solid-state transesterification method of prepolymers. Among these method, from the industrial viewpoint, the interfacial polymerization method and the melting transesterification method are more advantageous. In the following, typical examples of these two methods are described.

The reaction of the interfacial polymerization method may be conducted, for example, by the following manner. First, the aromatic dihydroxy compound is reacted with phosgene in the presence of an organic solvent inert to the reaction and an alkali aqueous solution while maintaining the reaction system at a pH of usually not less than 9. At this time, if required, a molecular weight controller (end stopping agent) and an antioxidant for the aromatic hydroxy compound may be allowed to exist in the reaction system. Next, a polymerization catalyst such as a tertiary amine or a quaternary ammonium salt is added to the reaction system to conduct the interfacial polymerization.

Examples of the organic solvent inert to the reaction include chlorinated hydrocarbons such as dichloromethane,

1,2-dichloroethane, chloroform, monochlorobenzene and dichlorobenzene; and aromatic hydrocarbons such as benzene, toluene and xylene. Examples of the alkali compound used for preparing the alkali aqueous solution include hydroxides of alkali metals such as sodium hydroxide and potassium hydroxide.

Examples of the molecular weight controller include compounds containing a monovalent phenolic hydroxyl group. Specific examples of the molecular weight controller include m-methyl phenol, p-methyl phenol, m-propyl phenol, p-propyl phenol, p-tert-butyl phenol and p-long chain alkylsubstituted phenols. The amount of the molecular weight controller used is usually 0.5 to 50 mol and preferably 1 to 30 mol on the basis of 100 mol of the aromatic dihydroxy compound.

Examples of the polymerization catalyst include tertiary amines such as trimethylamine, triethylamine, tributylamine, tripropylamine, trihexylamine and pyridine; and quaternary ammonium salts such as trimethylbenzyl ammonium chloride, tetramethyl ammonium chloride and triethylbenzeyl ammonium chloride.

The phosgene reaction is usually conducted at a temperature of 0 to 40°C for a period of from several minutes (for example, 10 min) to several hours (for example, 6 hr). The molecular weight controller may be appropriately added at the time between after completion of the phosgene reaction and before initiation of the polymerization reaction.

The reaction using the melting transesterification method may be conducted, for example, by subjecting a carbonic diester and an aromatic dihydroxy compound to transesterification reaction. Examples of the carbonic diester include dialkyl carbonate compounds such as dimethyl carbonate, diethyl carbonate and di-tert-butyl carbonate; diphenyl carbonate; and substituted diphenyl carbonates such as ditolyl carbonate. Among these carbonic diesters, preferred are diphenyl carbonate and substituted diphenyl carbonates, and more preferred is diphenyl carbonate.

In general, the melting transesterification method is conducted in the presence of a transesterification catalyst. The transesterification catalyst used in the method is not particularly limited, and is preferably an alkali metal compound and/or an alkali earth metal compound. The transesterification catalyst may be used in combination with a basic compound as an auxiliary component such as a basic boron compound, a basic phosphorus compound, a basic ammonium compound and an amine-based compound. The transesterification reaction is usually conducted at a temperature of 100 to 320°C. The melt-polycondensation reaction following the transesterification reaction may be conducted under reduced pressure finally reaching not more than 2 mm Hg while removing by-products such as aromatic hydroxy compounds.

The melt-polycondensation may be conducted by either a batch method or a continuous method, and is preferably conducted by a continuous method. Examples of the preferred catalyst deactivator used in the melting transesterification method include compounds capable of neutralizing the transesterification catalyst, for example, sulfur-containing acid compounds and derivatives formed therefrom. The amount of the catalyst deactivator used (added) is usually 0.5 to 10 equivalents and preferably 1 to 5 equivalents on the basis of the alkali metal contained in the catalyst, and usually 1 to 100 ppm and preferably 1 to 20 ppm on the basis of the polycarbonate.

The amount of the end hydroxyl group contained in the aromatic polycarbonate resin which has a large influence on thermal stability, hydrolysis stability and color tone of the resin may be appropriately controlled by conventionally known optional methods. In the case of the melting transesterification method, the mixing ratio between the carbonic diester and the aromatic dihydroxy compound as well as the vacuum degree used upon the melt-polycondensation reaction are controlled to thereby obtain an aromatic polycarbonate having a desired molecular weight and a desired amount of the end hydroxyl group. In the melting transesterification method, the amount of the carbonate diester used is usually not less than an equimolar amount and preferably 1.01 to 1.30 mol on the basis of 1 mol of the aromatic dihydroxy compound. In order to positively control the amount of the end hydroxyl group, there may be used such a method of separately adding an end stopping agent upon the reaction. Examples of the end stopping agent include monohydric phenols, monovalent carboxylic acids and carbonic diesters.

The molecular weight of the aromatic polycarbonate resin used in the present invention is controlled such that the viscosity-average molecular weight [Mv] calculated from a solution viscosity thereof is usually 10,000 to 50,000, preferably 12,000 to 40,000 and more preferably 14,000 to 30,000, from the viewpoint of good mechanical strength and good fluidity (easiness of molding). Also, two or more kinds of aromatic polycarbonate resins that are different in viscosity-average molecular weight from each other may be used in the form of a mixture thereof. Further, the above aromatic polycarbonate resins may also be mixed with those aromatic polycarbonate resins having a viscosity-average molecular weight out of the above-specified range, if required.

The viscosity-average molecular weight [Mv] used herein means the value calculated from an intrinsic viscosity [η] (unit: dL/g) as measured at 20°C in methylene chloride as a solvent using an Ubbellohde viscometer according to Schnell's viscosity formula: $\eta = 1.23 \times 10^{-4} M^{0.83}$ wherein the intrinsic viscosity [η] is the value calculated from a specific viscosity [η sp] as measured at each solution concentration [C] (g/dL) according to the following formula:

$$\eta = \lim_{C \to 0} \eta_{sp} / c$$

The end hydroxyl group concentration of the aromatic polycarbonate resin used in the present invention is usually not more than 1000 ppm, preferably not more than 800 ppm and more preferably not more than 600 ppm. The lower limit of the end hydroxyl group concentration of the aromatic polycarbonate resin, in particular, such an aromatic polycarbonate resin produced by transesterification method, is 10 ppm, preferably 30 ppm and more preferably 40 ppm. When the end hydroxyl group concentration of the aromatic polycarbonate resin is controlled to not less than 10 ppm, the aromatic polycarbonate resin is prevented from undergoing reduction in a molecular weight thereof, resulting in such a tendency that the obtained resin composition is improved in mechanical properties. Also, when the end hydroxyl group concentration of the aromatic polycarbonate resin is controlled to not more than 1000 ppm, there is a tendency that the obtained resin composition is further improved in retention heat stability and color tone.

The unit ppm of the above end hydroxyl group concentration represents a weight of the end hydroxyl group based on the weight of the aromatic polycarbonate resin. The end hydroxyl group concentration may be measured by colorimetric quantity determination using a titanium tetrachloride/acetic acid method (the method described in "Macromol. Chem.", 88, 215 (1965)).

In addition, the aromatic polycarbonate resin used in the present invention may also contain an aromatic polycarbonate oligomer in order to improve an appearance of molded products obtained therefrom as well as a fluidity. The viscosity-average molecular weight [Mv] of the aromatic polycarbonate oligomer is usually 1,500 to 9,500 and preferably 2,000 to 9,000. The amount of the aromatic polycarbonate oligomer used is usually not more than 30% by weight based on the weight of the aromatic polycarbonate resin.

Further, in the present invention, as the aromatic polycarbonate resin, there may also be used not only the virgin resin, but also those aromatic polycarbonate resins regenerated from used resin products, i.e., so-called material-recycled aromatic polycarbonate resins. Examples of the used resin products include optical storage media such as optical discs, light guide plates, transparent members for vehicles such as automobile window glass, automobile headlamp lenses and windshields, containers such as water bottles, ophthalmic lenses, and building materials such as sound insulating walls, glass windows and corrugated sheets. Further, there may also be used nonconforming products and crushed or pulverized products obtained from sprues and runners as well as pellets obtained by melting these products. The amount of the recycled aromatic polycarbonate resin used is usually not more than 80% by weight and preferably not more than 50% by weight based on the weight of the virgin resin.

<Alicyclic polyester resin (B)>

The alicyclic polyester resin used in the present invention may be obtained by esterifying or transesterifying a dicarboxylic acid component and a diol component together with a small amount of the other optional components, and then subjecting the resultant reaction product to polycondensation reaction. The dicarboxylic acid component contains an alicyclic dicarboxylic acid or an ester-forming derivative thereof as a main component, whereas the diol component contains an alicyclic diol as a main component. The "main component" used herein means that the compound is used in an amount of usually not less than 80 mol% and preferably not less than 90 mol% based on the dicarboxylic acid component or the diol component. When the contents of the alicyclic dicarboxylic acid (or the ester-forming derivative thereof) and the alicyclic diol are less than 80 mol%, the obtained alicyclic polyester resin tends to be deteriorated in compatibility with the aromatic polycarbonate resin, resulting in poor transparency and poor heat resistance of the resultant resin composition.

Specific examples of the alicyclic dicarboxylic acid or the ester-forming derivative thereof include 1,2-cyclohexane dicarboxylic acid, 1,3-cyclohexane dicarboxylic acid, 1,4-cyclohexane dicarboxylic acid, 1,4-decahydronaphthalene dicarboxylic acid, 1,5-decahydronaphthalene dicarboxylic acid, 2,6-decahydronaphthalene dicarboxylic acid, 2,7-decahydronaphthalene dicarboxylic acid and ester-forming derivative thereof. Among these compounds, preferred are alicyclic dicarboxylic acids having 6 to 12 carbon atoms and ester-forming derivatives thereof, more preferred are 1,4-cyclohexane dicarboxylic acid and ester-forming derivatives thereof, and still more preferred is 1,4-cyclohexane dicarboxylic acid.

When using the 1,4-cyclohexane dicarboxylic acid, the ratio of a trans-isomer to a cis-isomer thereof is usually 80/20 to 100/0, preferably 85/15 to 100/0 and more preferably 90/10 to 100/0. When satisfying the above specified condition, the obtained alicyclic polyester resin is enhanced in heat resistance.

Examples of the dicarboxylic acid component used in the present invention include aromatic dicarboxylic acids, aliphatic dicarboxylic acids, etc. Specific examples of the dicarboxylic acid component include aromatic dicarboxylic

acids such as terephthalic acid, phthalic acid, isophthalic acid, phenylenedioxycarboxylic acid, 4,4'-diphenyldicarboxylic acid, 4,4'-diphenyletherdicarboxylic acid, 4,4'-diphenylketonedicarboxylic acid, 4,4'-diphenoxyethanedicarboxylic acid, 4,4'-diphenylsulfonedicarboxylic acid and 2,6-naphthalenedicarboxylic acid; aliphatic dicarboxylic acids such as succinic acid, glutaric acid, adipic acid, pimelic acid, suberic acid, azelaic acid, sebacic acid, undecadicarboxylic acid and dodecadicarboxylic acid; and C1 to C4 alkyl esters thereof and halogenated product thereof.

The alicyclic diol is preferably in the form of a 5-membered ring or 6-membered ring alicyclic diol from the viewpoint of good heat resistance of the obtained polyester resin. Specific examples of such an alicyclic diol include 5-membered ring diols such as 1,2-cyclopentanedimethanol, 1,3-cyclopentanedimethanol and bis(hydroxymethyl)tricyclo [5.2.1.0]decane; and 6-membered ring diols such as 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol and 2,2-bis(4-hydroxycyclohexyl) propane. Among these alicyclic diols, preferred are 1,2-cyclohexanedimethanol, 1,3-cyclohexanedimethanol, 1,4-cyclohexanedimethanol, and more preferred is 1,4-cyclohexanedimethanol. The 1,4-cyclohexanedimethanol exhibits a high reactivity owing to its methylol groups bonded at para-positions, and has advantages such as facilitated production of polyesters having a high polymerization degree, i.e., facilitated production of polyester resins having a high glass transition temperature, as well as good industrial availability. The ratio of a trans-isomer to a cis-isomer of the 1,4-cyclohexanedimethanol is usually 60/40 to 100/0.

Examples of the diol component used in the present invention include aliphatic diols and aromatic diols. Specific examples of the diol component include aliphatic diols such as ethylene glycol, propylene glycol, butanediol, pentanediol and hexane diol; and aromatic diols such as xylylene glycol, 4,4'-dihydroxybiphenyl, 2,2-bis(4'-hydroxyphenyl)propane, bis(4-hydroxyphenyl)sulfone and bis(4-β-hdyroxyethoxyphenyl)sulfonic acid.

The alicyclic polyester resin used in the present invention may contain, in addition to the above diol component and dicarboxylic acid component, a small amount of a copolymerizable component. Examples of the copolymerizable component include hyroxycarboxylic acids such as glycolic acid, p-hydroxybenzoic acid and p-β-hydroxyethoxybenzoic acid; monofunctional components such as alkoxycarboxylic acids, stearyl alcohol, benzyl alcohol, stearic acid, behenic acid, benzoic acid, tert-butyl benzoic acid and benzoyl benzoic acid; and tri- or more polyfunctional components such as tricarballylic acid, trimellitic acid, trimesic acid, pyromellitic acid, naphthalenetetracarboxylic acid, gallic acid, trimethylol ethane, trimethylol propane, glycerol, pentaerythritol and sugar esters. These components may be used in an amount of not more than 10 mol% based on the alicyclic polyester resin.

The ratio between the dicarboxylic acid component and the diol component used in the esterification reaction or the transesterification reaction is as follows. That is, a total amount of diols contained in the diol component is usually 1 to 2 mol per 1 mol of a total amount of dicarboxylic acids contained in the dicarboxylic acid component. In particular, when the diol component contain a diol having a high boiling point such as 1,4-cyclohexane dimethanol as a main component, the molar ratio of the diol component to the dicarboxylic acid component is 1 to 1.2.

In the esterification reaction, transesterification reaction and polycondensation reaction, a catalyst may be used in order to attain a sufficient reaction rate. The catalysts used in these reactions are not particularly limited as long as they are usable in ordinary esterification and transesterification reactions, and there may be used extensive known catalysts. Specific examples of the catalysts include titanium compounds, germanium compounds, antimony compounds and tin compounds. Among these compounds, the titanium compounds are preferably used because they exhibit a high catalytic activity for both the esterification or transesterification reaction and the subsequent polycondensation reaction. Specific examples of the titanium compounds include tetra-n-propyl titanate, tetra-iso-propyl titanate, tetra-n-butyl titanate and hydrolyzed products of these organic titanates. These titanium compounds may be used in combination of any two or more thereof. Further, if required, these titanium compounds may be used in combination with magnesium compounds or phosphorus compounds. The amount of the catalyst used is usually 1 to 2000 ppm and preferably 10 to 1000 ppm based on the alicyclic polyester resin produced.

The intrinsic viscosity of the alicyclic polyester resin is usually 0.4 to 1.5 dL/g and preferably 0.5 to 1.3 dL/g from the viewpoints of good mechanical strength and good fluidity of the resin. In addition, the obtained alicyclic polyester resin may be subjected to solid-state polymerization, if required, in order to further enhance an intrinsic viscosity thereof. The intrinsic viscosity may be measured at 30°C in a mixed solvent containing phenol and tetrachloroethane at a weight ratio of 1/1 using an Ubbellohde viscometer.

The end carboxylic acid concentration of the alicyclic polyester resin is usually not more than 50 eq/t, preferably not more than 30 eq/t and more preferably not more than 20 eq/t. When the end carboxylic acid concentration of the alicyclic polyester resin is too high, the alicyclic polyester resin tends to be deteriorated in hydrolysis resistance (wet-heat resistance).

The melting point of the alicyclic polyester resin, for example, that of the alicyclic polyester resin produced from the dicarboxylic acid component containing 1,4-cyclohexanedicarboxylic acid as a main component and the diol component comprising 1,4-cyclohexane dimethanol as a main component, is usually 200 to 250°C, preferably 210 to 230°C and more preferably 215 to 230°C.

<Organic phosphoric ester metal salt (C)>

The organic phosphoric ester metal salt used in the present invention is at least one compound selected from the group consisting of organic phosphoric ester metal salts represented by any of the following general formulae (1) to (4). The organic phosphoric ester metal salts represented by the general formulae (1) to (4) are hereinafter occasionally referred to as "component C1" to "component C4", respectively.

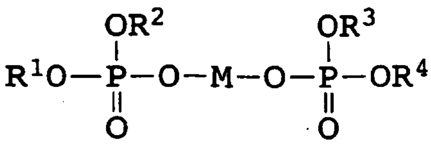 (1)

wherein $R^1$ to $R^4$ are respectively an alkyl group or an aryl group and may be the same or different; and M is a metal selected from the group consisting of alkali earth metals and zinc,

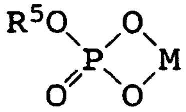 (2)

wherein $R^5$ is an alkyl group or an aryl group; and M is a metal selected from the group consisting of alkali earth metals and zinc,

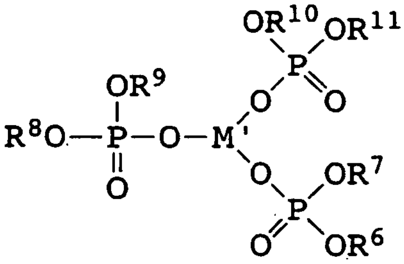 (3)

wherein $R^6$ to $R^{11}$ are respectively an alkyl group or an aryl group and may be the same or different; and M' is a metal atom capable of forming a trivalent metal ion, and

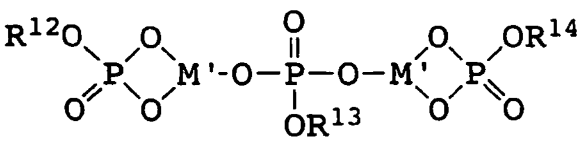 (4)

wherein $R^{12}$ to $R^{14}$ are respectively an alkyl group or an aryl group and may be the same or different; and M' is a metal atom capable of forming a trivalent metal ion and the two M' groups may be the same or different.

In the general formulae (1) to (4), $R^1$ to $R^{14}$ are preferably respectively an alkyl group having 1 to 30 carbon atoms or an aryl group having 6 to 30 carbon atoms, and more preferably an alkyl group having 2 to 25 carbon atoms, a phenyl group, a nonylphenyl group, a stearylphenyl group, a 2,4-di-tert-butylphenyl group, a 2,4-di-tert-butyl-methylphenyl group or a tolyl group.

From the viewpoints of enhancing transparency and/or a hue of the resin composition, $R^1$ to $R^{14}$ are preferably respectively an alkyl group having 2 to 25 carbon atoms, and more preferably octyl, 2-ethylhexyl, isooctyl, nonyl, isononyl, decyl, isodecyl, dodecyl, tridecyl, isotridecyl, tetradecyl, hexadecyl or octadecyl. In the general formulae (1) and (2), M is preferably zinc. Also, in general formulae (3) and (4), M' is preferably aluminum.

In addition, the component C used in the present invention may comprise combination of any two or more of the components C1 to C4. Further, among the organic phosphoric ester metal salts represented by the above general formulae (1) to (4), especially preferred are organic phosphoric ester metal salts represented by the following general formulae (1) and/or (2) wherein M is preferably zinc. Further, in this case, in the general formulae (1) and (2), $R^1$ to $R^5$ are more preferably respectively an alkyl group having 2 to 25 carbon atoms. In particular, the weight ratio of the component C1 to the component C2 is preferably 1/9 to 9/1.

Examples of the especially preferred organic phosphoric ester metal salts include a mixture of a zinc salt of monostearyl acid phosphate and a zinc salt of distearyl acid phosphate, and a mixture of an aluminum salt of monostearyl acid phosphate and an aluminum salt of distearyl acid phosphate. These preferred organic phosphoric ester metal salts are commercially available under tradenames such as "LBT-1830" and "LBT-1813" produced by Sakai Kagaku Kogyo Co., Ltd., and "JP-518Zn" produced by Johoku Kagaku Kogyo Co., Ltd.

<Phosphorus-based compound (D)>

The phosphorus-based compound used in the present invention is at least one compound selected from the group consisting of phosphoric esters represented by the following general formula (5), phosphorous esters represented by the following general formula (6) and phosphonites represented by the following general formula (7). The phosphoric esters, phosphorous esters and phosphonite compounds are hereinafter occasionally referred to as the component D1, component D2 and component D3, respectively.

$$O=P(OH)_n(OR)_{3-n} \qquad (5)$$

wherein R is an alkyl group or an aryl group and the plural R groups, if any, may be the same or different; and n is an integer of 0 to 2,

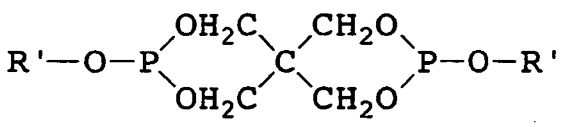

(6)

wherein R' is an alkyl group or an aryl group and the two R' groups may be the same or different, and

$$(R_bO)_2PR_a\text{-}R_aP(OR_b)_2 \qquad (7)$$

wherein $R_a$ is an aryl group or an arylene group; $R_b$ is an alkyl group or an aryl group; and the plural $R_a$ groups and the plural $R_b$ groups may be respectively the same or different.

<Phosphoric esters (component D1)>

In the general formula (5), R is preferably an alkyl group having 1 to 30 carbon atoms or an aryl group having 6 to 30 carbon atoms, and more preferably an alkyl group having 2 to 25 carbon atoms, a phenyl group, a nonylphenyl group, a stearylphenyl group, a 2,4-di-tert-butylphenyl group, a 2,4-di-tert-butyl-methylphenyl group or a tolyl group.

From the viewpoints of enhancing transparency and/or a hue of the resin composition, the phosphoric esters are preferably those phosphoric esters represented by the following general formula (I-I):

$$O=P(OH)_{n'}(OR'')_{3-n'} \qquad (I\text{-}I).$$

In the general formula (I-I), R" is an alkyl group having 2 to 25 carbon atoms and the plural R" groups, if any, may be the same or different; and n' is 1 or 2. Examples of the alkyl group as R" include octyl, 2-ethylhexyl, isooctyl, nonyl, isononyl, decyl, isodecyl, dodecyl, tridecyl, isotridecyl, tetradecyl, hexadecyl and octadecyl.

<Phosphorous acid esters (component D2)>

In the above general formula (6), the alkyl group as R' is preferably an alkyl group having 1 to 30 carbon atoms, whereas the aryl group as R' is preferably an aryl group having 6 to 30 carbon atoms.

Specific examples of the phosphorous esters include distearyl pentaerythritol diphosphite, dinonyl pentaerythritol diphosphite, bisnonylphenyl pentaerythritol diphosphite, bis(2,4-di-tert-butylphenyl) pentaerythritol diphosphite, bis (2,6-di-tert-butyl-4-methylphenyl) pentaerythritol diphosphite, bis(2,6-di-tert-butyl-4-ethylphenyl) pentaerythritol diphosphite, bis(2,6-di-tert-butyl-4-isopropylphenyl) pentaerythritol diphosphite and bis(2,4-dicumylphenyl) pentaerythritol diphosphite.

Among the above phosphorous esters, preferred are distearyl pentaerythritol diphosphite, bis(2,4-di-tert-butylphenyl) pentaerythritol diphosphite and bis(2,6-di-tert-butyl-4-methylphenyl) pentaerythritol diphosphite, and more preferred are bis(2,4-di-tert-butylphenyl) pentaerythritol diphosphite and bis(2,6-di-tert-butyl-4-methylphenyl) pentaerythritol diphosphite.

<Phosphonite compounds (component D3)>

Specific examples of the phosphonite compounds include tetrakis(2,4-di-tert-butylphenyl)-4,4'-biphenylene diphosphonite, tetrakis(2,5-di-tert-butylphenyl)-4,4'-biphenylene diphosphonite, tetrakis(2,3,4-trimethylphenyl)-4,4'-biphenylene diphosphonite, tetrakis(2,3-dimethyl-5-ethylphenyl)-4,4'-biphenylene diphosphonite, tetrakis(2,4-di-tert-butyl-5-methylphenyl)-4,4'-biphenylene diphosphonite, tetrakis(2,6-di-tert-butyl-5-ethylphenyl)-4,4'-biphenylene diphosphonite, tetrakis(2,3,4-tributylphenyl)-4,4'-biphenylene diphosphonite and tetrakis(2,4,6-tri-tert-butylphenyl)-4,4'-biphenylene diphosphonite. Among these phosphonite compounds, preferred are tetrakis(2,4-di-tert-butylphenyl)-4,4'-biphenylene diphosphonite and tetrakis(2,4-di-tert-butyl-5-methylphenyl)-4,4'-biphenylene diphosphonite.

In the present invention, these phosphorus-based compounds (D) may be used in combination of any two or more thereof. From the viewpoints of good transparency, hue and retention heat stability, there are preferably used the phosphorous esters (component D2) and/or the phosphonite compounds (component D3).

<Polyorganosiloxane>

In the resin composition of the present invention, a polyorganosiloxane may be used therein as an optional component. The polyorganosiloxane has an effect of further enhancing transparency and/or a hue of the resin composition of the present invention.

The polyorganosiloxane contains a phenyl group bonded to at least a side chain thereof, and preferably has a branched siloxane structure. The polyorganosiloxane may be in the form of a single compound or a mixture of compounds. The polyorganosiloxane in the form of a mixture preferably comprise combination of the polyorganosiloxane containing a phenyl group bonded to at least a side chain thereof with the polyorganosiloxane having a branched siloxane structure.

The kinematic viscosity of the polyorganosiloxane as measured at 25°C is usually 1 to 200 cSt, preferably 5 to 100 cSt and more preferably 10 to 50 cSt. When the kinematic viscosity of the polyorganosiloxane is not less than 1 cSt, the amount of gases generated upon molding is desirably reduced, thereby preventing risk of occurrence of molding defects owing to the gases such as, for example, non-filling (short shot), gas burning and defective transfer. On the other hand, when the kinematic viscosity of the polyorganosiloxane is not more than 200 cSt, the effect of enhancing transparency and/or a hue of the resin composition of the present invention becomes more remarkable. The polyorganosiloxane may be readily produced by ordinary organic reactions.

<Antioxidant>

In the resin composition of the present invention, an antioxidant may also be used therein as an optional component. The antioxidant is preferably a hindered phenol-based antioxidant. Specific examples of the antioxidant include pentaerythritol tetrakis[3-(3,5-di-tert-butyl-4-hydroxyphenyl)propionate], octadecyl-3-(3,5-di-tert-butyl-4-hydroxyphenyl)propionate, thiodiethylenebis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octylthiomethyl)-o-cresol, ethylenebis(oxyethylene)bis[3-(5-tert-butyl-4-hydroxy-m-tolyl)propionate], hexamethylenebis[3-(3,5-di-tert-butyl-4-hydroxyphenyl)propionate], 1,3,5-tris(3,5-di-tert-butyl-4-hydroxybenzyl)-1,3,5-triazine-2,4,6-(1H, 3H, 5H)-trione and 2,6-di-tert-butyl-4-(4,6-bis(octylthio)-1,3,5-triazine-2-ylamino)phenol. Among these antioxidants, preferred are pentaerythritol tetrakis[3-(3,5-di-tert-butyl-4-hydroxyphenyl)propionate] and octadecyl-3-(3,5-di-tert-butyl-4-hydroxyphenyl)propionate. The above two antioxidants are respectively commercially available under

tradenames "IRGANOX 1010" and "IRGANOX 1076" from Ciba Specialty Chemicals, Corp.

<Mold release agent>

In the resin composition of the present invention, a mold release agent may be used therein as an optional component. The mold release agent is preferably at least one compound selected from the group consisting of aliphatic carboxylic acids, esters of aliphatic carboxylic acids and alcohols, and aliphatic hydrocarbon compounds.

Examples of the aliphatic carboxylic acids include saturated or unsaturated aliphatic mono-, di- or tricarboxylic acids. The aliphatic carboxylic acids include alicyclic carboxylic acids. The aliphatic carboxylic acids are preferably mono- or di-carboxylic acids having 6 to 36 carbon atoms and more preferably aliphatic saturated monocarboxylic acids having 6 to 36 carbon atoms. Specific examples of the aliphatic carboxylic acids include palmitic acid, stearic acid, caproic acid, capric acid, lauric acid, arachic acid, behenic acid, lignoceric acid, cerotic acid, melissic acid, tetratriacontanoic acid, montanoic acid, adipic acid and azelaic acid.

As the aliphatic carboxylic acids contained in the esters of aliphatic carboxylic acids and alcohols, there may be used the same aliphatic carboxylic acids as described above. Examples of the alcohols capable of forming the esters by reacting with the aliphatic carboxylic acids include saturated or unsaturated monohydric alcohols and saturated or unsaturated polyhydric alcohols. These alcohols may contain a substituent group such as a fluorine atom and an aryl group. In particular, among these alcohols, preferred are monohydric or polyhydric saturated alcohols having not more than 30 carbon atoms, and mire preferred are aliphatic saturated monohydric alcohols or polyhydric alcohols having not more than 30 carbon atoms. These alcohols may be in the form of an alicyclic compound. Specific examples of the alcohols include octanol, decanol, dodecanol, stearyl alcohol, behenyl alcohol, ethylene glycol, diethylene glycol, glycerol, pentaerythritol, 2,2-dihydroxyperfluoropropanol, neopentyl glycol, ditrimethylol propane and dipentaerythritol. The ester compounds of these aliphatic carboxylic acids and alcohols may contain the aliphatic carboxylic acids and the alcohols as impurities, and may be in the form of a mixture containing a plurality of these compounds.

Specific examples of the esters of the aliphatic carboxylic acids and alcohols include beeswax (mixture comprising myricyl palmitate as a main component), stearyl stearate, behenyl behenate, stearyl behenate, glycerol monopalmitate, glycerol monostearate, glycerol distearate, glycerol tristearate, pentaerythritol monopalmitate, pentaerythritol monostearate, pentaerythritol distearate, pentaerythritol tristearate and pentaerythritol tetrastearate.

Examples of the aliphatic hydrocarbons include liquid paraffins, paraffin waxes, micro waxes, polyethylene waxes, Fischer-Tropsch waxes and $\alpha$-olefin oligomers having 3 to 12 carbon atoms. The aliphatic hydrocarbons used therein include alicyclic hydrocarbons. In addition, these hydrocarbon compounds may be partially oxidized.

<Dyes or pigments>

In the resin composition of the present invention, a dye or a pigment may also be used therein as an optional component. As the dye or pigment, there may be used inorganic pigments, organic pigments and organic dyes. Examples of the inorganic pigments include carbon blacks; sulfide-based pigments such as cadmium red and cadmium yellow; silicate-based pigments such as ultramarine blue; oxide-based pigments such as titanium oxide, zinc white, red iron oxide, chromium oxide, iron black, titanium yellow, zinc-iron-based brown, titanium/cobalt-based green, cobalt green, cobalt blue, copper/chromium-based black and copper/iron-based black; chromate-based pigments such as chrome yellow and molybdate orange; and ferrocyanide-based pigments such as Prussian blue. Examples of the organic pigment and organic dyes include phthalocyanine-based dyes and pigments such as copper phthalocyanine blue and copper phthalocyanine green; condensed polycyclic dyes and pigments such as azo-based compounds, e.g., nickel azo yellow, thioindigo-based compounds, perynone-based compounds, perylene-based compounds, quinacridone-based compounds, dioxazine-based compounds, isoindolinone-based compounds and quinaphthalone-based compounds; and other dyes and pigment such as anthraquinone-based compounds, heterocyclic compounds and methyl-based compounds.

In particular, among these dyes and pigments, from the viewpoint of good heat stability, preferred are titanium oxide, carbon blacks, cyanine-based compounds, quinoline-based compounds, anthraquinone-based compounds and phthalocyanine-based compounds, and more preferred are carbon blacks, anthraquinone-based compounds and phthalocyanine-based compounds. Specific examples of commercial products of these dyes and pigments include "MACROLEX Blue RR", "MACROLEX Violet 3R" and "MACROLEX Violet B" all produced by Bayer AG.; "Sumiplast Violet RR", "Sumiplast Violet B" and "Sumiplast Blue OR" all produced by Sumitomo Kagaku Kogyo Co., Ltd.; and "Diaresin Violet D", "Diaresin Blue G" and "Diaresin Blue N" all produced by Mitsubishi Chemical Corporation.

<Heat stabilizer>

In the resin composition of the present invention, a heat stabilizer may also be used therein as an optional

component. The heat stabilizer is preferably a phosphorous ester compound. Specific examples of the phosphorous ester compound include trioctyl phosphite, tridecyl phosphite, triphenyl phosphite, tris(nonylphenyl) phosphite, tris(octylphenyl) phosphite, tris(2,4-di-tert-butylphenyl) phosphite, tridecyl phosphite, didecylmonophenyl phosphite, dioctylmonophenyl phosphite, diisopropylmonophenyl phosphite, monobutyldiphenyl phosphite, monodecyldiphenyl phosphite and monooctyldiphenyl phosphite. Among these phosphorous esters, preferred is tris(2,4-di-tert-butylphenyl) phosphite.

<Flame retardant (dropping inhibitor)>

In the resin composition of the present invention, a flame retardant may also be used therein as an optional component. Examples of the preferred flame retardant include halogen-based flame retardants such as polycarbonates of halogenated bisphenol A, brominated bisphenol-based epoxy resins, brominated bisphenol-based phenoxy resins and brominated polystyrene; phosphoric ester-based flame retardants such as triphenyl phosphate, resorcinol bis(dixylenylphosphate), hydroquinone bis(dixylenylphosphate), 4,4'-biphenol bis(dixylenylphosphate), bisphenol A bis(dixylenylphosphate), resorcinol bis(diphenylphosphate), hydroquinone bis(diphenylphosphate), 4,4'-biphenyl bis(diphenylphosphate) and bisphenol A bis(diphenylphosphate); organic metal salt-based flame retardants such as dipotassium diphenyl sulfone-3,3'-disulfonate, potassium diphenyl sulfone-3-sulfonate and potassium perfluorobutane sulfonate; and polyorganosiloxane-based flame retardants.

<Other resins>

In the resin composition of the present invention, as optional components, there may also be used other resins including polyamide resins, polyimide resins, polyether imide resins, polyurethane resins, polyphenylene ether resins, polyphenylene sulfide resins, polysulfone resins, polyolefin resins (such as polyethylene resins and polypropylene resins), styrene-based resins (such as polystyrene and acrylonitrile-styrene copolymers), polymethacrylate resins, phenol resins, epoxy resins, etc.

<Other additives>

In the resin composition of the present invention, in addition to the above components, there may also be used various additives for resins. Examples of the additives for resins include weather resistance modifiers, antistatic agents, anti-fogging agents, lubricants, anti-blocking agents, fluidity modifiers, plasticizers, dispersants, anti-fungus agents and fillers.

Next, the resin compositions according to the first and second inventions are explained.

<Resin composition according to the first invention>

The resin composition of the first invention comprise 100 parts by weight of a mixture comprising 1 to 99 parts by weight of the aromatic polycarbonate resin (A) and 1 to 99 parts by weight of the alicyclic polyester resin (B), and 0.001 to 5 parts by weight of the organic phosphoric ester metal salt (C).

In the above resin composition, the ratio between amounts of the aromatic polycarbonate resin (A) and the alicyclic polyester resin (B) used [weight ratio (A):(B)] is preferably 10:90 to 90:10, more preferably 30:70 to 90:10, still more preferably 25:75 to 90:10 and most preferably 60:40 to 90:10. When the amount of the aromatic polycarbonate resin (A) used is too small, for example, in the case where the alicyclic polyester resin has a crystallizability, the resin composition tends to be crystallized when being subjected to heat treatment upon sterilization, resulting in occurrence of white turbidity and, therefore, poor transparency as well as deterioration in heat resistance. On the other hand, when the amount of the aromatic polycarbonate resin (A) used is too large, the effect of improving a chemical resistance of the resin composition tends to be lowered.

In the above resin composition, the content of the organic phosphoric ester metal salt (C) is preferably 0.01 to 5 parts by weight and more preferably 0.05 to 3 parts by weight based on 100 parts by weight of a total amount of the aromatic polycarbonate resin (A) and the alicyclic polyester resin (B). When the content of the organic phosphoric ester metal salt (C) is too small, the resin composition tends to be undesirably tinted. When the content of the organic phosphoric ester metal salt (C) is too large, the resin composition tends to be deteriorated in hydrolysis resistance.

Also, when the resin composition contains titanium derived from catalysts used upon production of the respective resins, etc., the molar ratio of a phosphorus atom in the resin composition which is derived from the organic phosphoric ester metal salt (C) to the titanium atom contained in the composition (hereinafter referred to merely as "P/Ti") is usually 3 to 25 and preferably 5 to 20. When the ratio P/Ti is less than 3, the resin composition tends to be undesirably tinted. When the ratio P/Ti is more than 25, the resin composition tends to be deteriorated in hydrolysis resistance.

The resin composition used especially in the application fields requiring a high-temperature sterilization treatment such as medical equipments, preferably has an intrinsic viscosity retention rate of not less than 70% and a yellowness index of not more than 10 as measured after being exposed to a water vapor atmosphere at 120°C under 0.11 MPa within a pressure cooker tester. The measuring conditions are those described in Examples below. The low intrinsic viscosity retention rate means that the resin composition is deteriorated in water resistance, whereas the high yellowness index (YI) means that the resin composition is tinted yellowish and deteriorated in transparency. The resin composition whose intrinsic viscosity retention rate and yellowness index (YI) lie within the above-specified ranges can be obtained by selecting zinc or aluminum as the metal component of the organic phosphoric ester metal salt (C) and further controlling the blending ratio thereof to the preferred range.

<Resin composition according to the second invention>

The resin composition of the second invention comprise 100 parts by weight of a mixture comprising 1 to 99 parts by weight of the aromatic polycarbonate resin (A) and 1 to 99 parts by weight of the alicyclic polyester resin (B), 0.001 to 5 parts by weight of the organic phosphoric ester metal salt (C), and 0.001 to 1 part by weight of the phosphorus-based compound (D). From the viewpoint of good balance between transparency, hue, impact resistance, wet-heat resistance and retention heat stability, the resin composition is essentially required to contain both the organic phosphoric ester metal salt (C) and the phosphorus-based compound (D).

In the above resin composition, the ratio between amounts of the aromatic polycarbonate resin (A) and the alicyclic polyester resin (B) used [weight ratio (A):(B)] is preferably 30:70 to 95:5, more preferably 50:50 to 90:10, still more preferably 60:40 to 90:10 and most preferably 70:30 to 90:10. When the amount of the aromatic polycarbonate resin (A) used is too small, the resin composition tends to be deteriorated in heat resistance or impact resistance. On the other hand, when the amount of the aromatic polycarbonate resin (A) used is too large, the resin composition tends to be deteriorated in fluidity or chemical resistance.

In the above resin composition, the content of the organic phosphoric ester metal salt (C) is preferably 0.003 to 0.3 part by weight and more preferably 0.005 to 0.09 part by weight based on 100 parts by weight of a total amount of the aromatic polycarbonate resin (A) and the alicyclic polyester resin (B). When the content of the organic phosphoric ester metal salt (C) is too small, the resin composition tends to be deteriorated in transparency and/or hue. When the content of the organic phosphoric ester metal salt (C) is too large, the resin composition tends to be deteriorated in impact resistance, wet-heat resistance and retention heat stability.

In the above resin composition, the content of the phosphorus-based compound (D) is preferably 0.003 to 0.3 part by weight and more preferably 0.005 to 0.09 part by weight based on 100 parts by weight of a total amount of the aromatic polycarbonate resin (A) and the alicyclic polyester resin (B). When the content of the phosphorus-based compound (D) is too small, the resin composition tends to be deteriorated in transparency and/or hue. When the content of the phosphorus-based compound (D) is too large, the resin composition tends to be deteriorated in impact resistance, wet-heat resistance and retention heat stability.

The amount of the above polyorganosiloxane blended in the resin composition is usually 0.01 to 1 part by weight and preferably 0.03 to 0.8 part by weight based on 100 parts by weight of a total amount of the aromatic polycarbonate resin (A) and the alicyclic polyester resin (B). When the amount of the polyorganosiloxane blended is too small, the resin composition tends to fail to exhibit the effect of improving transparency and/or a hue. When the amount of the polyorganosiloxane blended is too large, there tens to occur molding defects owing to gases generated therefrom such as, for example, non-filling (short shot), gas burning and defective transfer.

The amount of the above phenol-based antioxidant blended in the resin composition is usually 0.01 to 1 part by weight based on 100 parts by weight of a total amount of the aromatic polycarbonate resin (A) and the alicyclic polyester resin (B). When the amount of the phenol-based antioxidant blended is too small, the resin composition tends to fail to exhibit the effect of addition thereof. When the amount of the phenol-based antioxidant blended is too large, it is economically disadvantageous.

The amount of the above mold release agent blended in the resin composition is usually 0.01 to 1 part by weight based on 100 parts by weight of a total amount of the aromatic polycarbonate resin (A) and the alicyclic polyester resin (B). When the amount of the mold release agent blended is too small, the resin composition tends to fail to exhibit the effect of addition thereof. When the amount of the mold release agent blended is too large, the resin composition tends to be deteriorated in hydrolysis resistance, or there tend to arise problems such as contamination of a mold upon injection molding.

The amount of the above dyes or pigments blended in the resin composition is usually not more than 1 part by weight, preferably not more than 0.3 part by weight and more preferably not more than 0.1 part by weight based on 100 parts by weight of a total amount of the aromatic polycarbonate resin (A) and the alicyclic polyester resin (B).

The amount of the above heat stabilizer blended in the resin composition is usually 0.001 to 1 part by weight and preferably 0.01 to 0.5 part by weight based on 100 parts by weight of a total amount of the aromatic polycarbonate resin (A) and the alicyclic polyester resin (B). When the amount of the heat stabilizer blended is too small, the resin

composition tends to fail to exhibit the effect of addition thereof. When the amount of the heat stabilizer blended is too large, the resin composition tends to be deteriorated in hydrolysis resistance.

The amount of the above flame retardant blended in the resin composition is usually 0.01 to 30 parts by weight, preferably 0.03 to 25 parts by weight and more preferably 0.05 to 20 parts by weight based on 100 parts by weight of a total amount of the aromatic polycarbonate resin (A) and the alicyclic polyester resin (B).

The resin composition of the present invention may be produced by previously mixing the above respective components with each other using various mixers such as a tumbler and a Henschel mixer, and then melt-kneading the resultant mixture using a Banbury mixer, a roll, a Brabender, a single-screw kneading extruder, a twin-screw kneading extruder, a kneader, etc. Alternatively, the respective components may be directly fed or may be fed after previously mixing only a part of the components, to the extruder through a feeder, and then melt-kneaded therein.

The resin composition of the present invention may be formed into a desired shape by various molding methods such as injection molding, injection compression molding, injection blow molding, extrusion molding and blow molding. In addition, a film or a sheet-like product extrusion-molded from the resin composition may be further subjected to vacuum molding, air-pressure molding, etc., to obtain the aimed molded product.

## EXAMPLES

The present invention is described in more detail by the following Examples. However, these Examples are only illustrative and not intended to limit a scope of the present invention. The raw materials used in Examples and Comparative Examples are described below. In the following Examples and Comparative Examples, the amounts of the respective components blended mean "parts by weight".

<Aromatic polycarbonate resin (component A)>

PC-1: Bisphenol A-type aromatic polycarbonate ("IUPILON S-3000FN" produced by Mitsubishi Engineering-Plastics Corporation; viscosity-average molecular weight: 22,500)
PC-2: Bisphenol A-type aromatic polycarbonate ("IUPILON H-4000FN" produced by Mitsubishi Engineering-Plastics Corporation; viscosity-average molecular weight: 15,500)
PC-3: Bisphenol A-type aromatic polycarbonate ("IUPILON E-2000FN" produced by Mitsubishi Engineering-Plastics Corporation; viscosity-average molecular weight: 28,000)

<Alicyclic polyester resin (component B)>

PCC(A)-1: Alicyclic polyester resin described in the following Production Example 1; intrinsic viscosity: 1.143 dL/g; end carboxylic acid concentration: 13.2 eq/t
PCC(A)-2: Alicyclic polyester resin described in the following Production Example 2; intrinsic viscosity: 0.841 dL/g; end carboxylic acid concentration: 2.7 eq/t
PCC(B)-1: Alicyclic polyester resin described in the following Production Example 3; intrinsic viscosity: 0.957 dL/g; end carboxylic acid concentration: 12.0 eq/t
PCC(B)-2: Alicyclic polyester resin described in the following Production Example 4; intrinsic viscosity: 0.666 dL/g; end carboxylic acid concentration: 5.1 eq/t

<Organic phosphoric ester metal salt (component C)>

C-1(a): Mixture of a zinc salt of monostearyl acid phosphate and a zinc salt of distearyl acid phosphate; "LBT-1830" produced by Sakai Chemical Industry Co., Ltd.
C-1 (b): Mixture of a zinc salt of monostearyl acid phosphate and a zinc salt of distearyl acid phosphate; "JP-518Zn" produced by Johoku Chemical Co., Ltd.
C-2: Mixture of an aluminum salt of monostearyl phosphate and an aluminum salt of distearyl phosphate; "LBT-1813" produced by Sakai Chemical Industry Co., Ltd.
C-3: Mixture of a calcium salt of monostearyl phosphate and a calcium salt of distearyl phosphate; "LBT-1820" produced by Sakai Chemical Industry Co., Ltd.

<Phosphorus-based compound (component D)>

D-1: Chemical formula: $O=P(OH)_{n'}(C_{18}H_{37})_{3-n'}$ (mixture of the compound wherein n' = 1 and the compound wherein n' = 2); "ADK STAB AX-71" produced by ADEKA CORPORATION.
D-2: Bis(2,4-di-tert-butylphenyl)pentaerythritol diphosphite; "ADK STAB PEP-24G" produced by ADEKA CORPORATION.
D-3: Bis(2,6-di-tert-butyl-4-methylphenyl)pentaerythritol diphosphite; "ADK STAB PEP-36" produced by ADEKA CORPORATION.
D-4: Tetrakis(2,4-di-tert-butylphenyl)-4,4'-biphenylene diphosphite; "SANDOSTAB P-EPQ" produced by Clariant Co., Ltd.
D-5: Tetrakis(2,4-di-tert-butyl-5-methylphenyl)-4,4'-biphenylene diphosphite; "GSY-P101" produced by API Corporation.

<Phosphorus compound other than the components C and D (component E)>

E-1: Phosphorous acid; produced by Wako Pure Chemical Industries, Ltd.
E-2: Polyphosphoric acid; produced by Wako Pure Chemical Industries, Ltd.
E-3: Phosphoric acid; produced by Wako Pure Chemical Industries, Ltd.
E-4: Tris(2,4-di-tert-butylphenyl)phosphite; "ADK STAB 2112" produced by ADEKA CORPORATION.

<Polyorganosiloxane (component F)>

F-1: Polymethylphenylsiloxane (branched type); "SH556" produced by Toray Dow Corning Silicone Co., Ltd.; kinematic viscosity: 22 cSt

<Other components>

Antioxidant: Pentaerythritol tetrakis[3-(3,5-di-tert-butyl-4-hydroxyphenyl)propionate]; "IRGANOX 1010" produced by Ciba Specialty Chemicals Corp.
Mold release agent: Pentaerythritol tetrastearate; "UNISTAR H476" produced by NOF CORPORATION.

Production Example 1:

A 100-L stainless steel reactor equipped with a stirrer, a distillation tube, a heater, a pressure gauge, a thermometer and a pressure-reducing device was charged with 101.5 parts by weight of 1,4-cyclohexanedicarboxylic acid (ratio of trans-isomer to cis-isomer: 96:4), 87.0 parts by weight of 1,4-cyclohexanedimethanol (ratio of trans-isomer to cis-isomer: 69:31) and 0.005 part by weight of a 6 wt% butanol solution of tetra-n-butyl titanate, and an interior of the reactor was then purged with a nitrogen gas. While sealing the interior of the reactor with a nitrogen gas, an inside temperature of the reactor was raised to 150°C over 30 min, and then raised from 150°C to 200°C over 1 hr. Next, the inside temperature of the reactor was held at 200°C for 1 hr to subject the contents of the reactor to esterification reaction. Thereafter, the inside temperature of the reactor was raised from 200°C to 250°C over 45 min while gradually reducing an inside pressure of the reactor to conduct a polycondensation reaction of the esterification reaction product. The polycondensation reaction was carried out for 3.7 hr while keeping the inside of the reactor under an absolute pressure of 0.1 kPa and maintaining the reaction temperature at 250°C. After completion of the polycondensation reaction, the obtained resin was withdrawn in the form of a strand into water, and then cut into pellets. As a result, it was confirmed that the thus obtained product had an intrinsic viscosity of 1.143 dL/g, an end carboxylic acid concentration of 13.2 eq/t, a YI value of 8.9 (as pellets) and a melting point of 217.3°C. Meanwhile, these properties were measured by the below-mentioned methods.

Production Example 2:

The same procedure as defined in Production Example 1 was conducted except that the amount of 1,4-cyclohexanedimethanol charged was changed to 87.9 parts by weight, and the polycondensation reaction time was changed from 3.7 hr to 4.5 hr. As a result, it was confirmed that the obtained product had an intrinsic viscosity of 0.841 dL/g, an end carboxylic acid concentration of 2.7 eq/t, a YI value of 13.8 (as pellets) and a melting point of 219.6°C.

Production Example 3:

The same procedure as defined in Production Example 1 was conducted except that the amount of 1,4-cyclohexanedimethanol charged was changed to 88.6 parts by weight, the absolute pressure inside of the reactor was changed to 0.1 kPa, and the reaction time after raising the reaction temperature to 250°C was changed to 3.6 hr. As a result, it was confirmed that the obtained product had an intrinsic viscosity of 0.957 dL/g and an end carboxylic acid concentration of 12 eq/t.

Production Example 4:

The same procedure as defined in Production Example 1 was conducted except that the amount of 1,4-cyclohexanedimethanol charged was changed to 87.5 parts by weight, the absolute pressure inside of the reactor was changed to 0.1 kPa, and the reaction time after raising the reaction temperature to 250°C was changed to 4.2 hr. As a result, it was confirmed that the obtained product had an intrinsic viscosity of 0.666 dL/g and an end carboxylic acid concentration of 5.1 eq/t.

<Method for measuring intrinsic viscosity>

Using a mixed solvent containing phenol and 1,1,2,2-tetrachloroethane at a weight ratio of 1/1, about 0.25 g of a sample to be measured was dissolved therein such that a concentration of the resultant solution was about 1.00 g/dL, and a concentration C (g/dL) of the solution was calculated. The thus prepared sample solution was cooled to 30°C and held at that temperature, and then subjected to determination of an intrinsic viscosity thereof in which a dropping time (sec) (t) in the sample solution and a dropping time (sec) (t0) in the solvent solely were respectively measured using a full-automatic solution viscometer "2CH Model DJ504" manufactured by Sentec Co., Ltd., and the intrinsic viscosity was calculated according to the following formula:

$$IV = ((1 + 4\ KH\eta sp)^{0.5} - 1)/(2\ KHC)$$

wherein $\eta sp = t/t0 - 1$; t is a dropping time (sec) in the sample solution to be measured; t0 is a dropping time in the solvent solely; C is a concentration (g/dL) of the sample solution; and KH is a Huggins constant. Meanwhile, 0.33 was employed as the Harkins constant.

<Method for measuring an end carboxylic acid concentration AV >

0.4 g of the pellets were sampled in a sampling tube and added to 25 mL of benzyl alcohol. The contents of the sampling tube were then heated in an oil bath set to 195±3°C for 7 to 9 min to dissolve the pellets in the alcohol. The thus obtained solution was allowed to stand for cooling to an ordinary temperature, mixed with 2 mL of ethyl alcohol, and then subjected to titration with a 0.01N sodium hydroxide/benzyl alcohol solution as a titrant by using an automatic titration apparatus "Type AUT-501" manufactured by Toa DKK Co., Ltd., as well as a composite pH electrode.

Meanwhile, the 0.01N sodium hydroxide/benzyl alcohol solution was prepared according to JIS K8006, and standardized to calculate a factor thereof. The titer (amount of titrant required) was determined from an inflection point of the obtained titration curve, and AV was calculated from the following formula:

$$\text{End carboxylic acid concentration (AV)} = \{(A - B) \times 0.01N \times F\}/W$$

wherein A is a titer (mL) of the sample measured; B is a titer (mL) of a blank; F is a strength of the 0.01N sodium

hydroxide/benzyl alcohol solution; and W is a weight of the pellets.

<Hue (1)>

According to JIS K7103, using a photoelectric colorimeter "ND-300" manufactured by Nippon Denshoku Co., Ltd., tristimulus values X, Y and Z of sample pellets filled in a cylindrical quartz cell having a diameter of 30 mm and a height of 18 mm were measured while rotating the cell at intervals of about 90°. The measurement was conducted four times to obtain an average value thereof. The yellowness YI was calculated according to the following formula:

$$YI = 100(1.28X - 1.06Z)/Y$$

<Method for measuring melting point>

According to JIS K7121, using a differential scanning calorimeter "DSC220" manufactured by Seiko Instruments Co., Ltd., the melting point was measured as follows. That is, about 10 mg of a test piece was cut from the pelletized sample by a cutter knife, placed in a aluminum pan and heated therein from room temperature to 300°C at a temperature rise rate of 20°c/min. After being maintained at 300°C for 3 min, the test piece was cooled from 300°C to 25°C at a temperature drop rate of 20°C/min, and then heated again to 300°C at a temperature rise rate of 20°C/min. The melting point was determined from the value obtained upon the second temperature rise, and the temperature at a maximal peak of heat of fusion was regarded as the melting point.

<Hydrolysis resistance>

Pellets were placed in a saturation-type pressure cooker tester "Type PC-242" manufactured by Hirayama Seisakusho Co., Ltd., and treated therein at 120°C under a water vapor pressure of 0.11 MPa for 24 hr. The hydrolysis resistance was expressed by a retention rate (%) of an intrinsic viscosity of the sample as a ratio of the intrinsic viscosity (IVI) after the treatment to the intrinsic viscosity (IVO) before the treatment.

Example 1A:

70 parts by weight of the above aromatic polycarbonate resin (PC-1), 30 parts by weight of the above alicyclic polyester resin (PCC(A)-1) and 0.1 part by weight of the above phosphoric ester metal salt (C-1a) were respectively weighed and uniformly mixed with each other using a tumbler mixer, thereby obtaining a mixture. The thus obtained mixture was fed to a hopper of a twin-screw kneader "TEX30-42W" with a deaerator manufactured by Nippon Seikosho Co., Ltd. While operating the twin-screw kneader at a cylinder set temperature of 280°C, a screw rotating speed of 150 rpm and a discharge amount of 15 kg/hr, the mixture was melt-kneaded and extruded into a strand shape, and then cut into pellets using a cutter. The thus obtained pellets were subjected to the above hydrolysis resistance test and measurement of YI. The results are shown in Table 1.

Examples 2A to 6A and Comparative Examples 1A to 4A:

Pellets were produced under the same kneading conditions as defined in Example 1A except that the respective components as shown in Table 1 were used instead of those used in Example 1A. The thus obtained pellets were subjected to the above hydrolysis resistance test and measurement of YI. The results are shown in Tables 1 and 2.

Table 1

| | Examples | | | | | |
|---|---|---|---|---|---|---|
| | 1A | 2A | 3A | 4A | 5A | 6A |
| Components blended | | | | | | |
| Component A | | | | | | |
| PC-1 (wt part) | 70 | 70 | 70 | 70 | 80 | 70 |

(continued)

| | | | | | | |
|---|---|---|---|---|---|---|
| Component B | | | | | | |
| PCC(A)-1 (wt part) | 30 | 30 | 30 | - | 20 | 30 |
| PCC(A)-2 (wt part) | - | - | - | 30 | - | - |
| Component C | | | | | | |
| C-1a (wt part) | 0.1 | - | 0.3 | 0.1 | 0.1 | - |
| C-2 (wt part) | - | 0.1 | - | - | - | - |
| C-3 (wt part) | - | - | - | - | - | 0.1 |
| Component E | | | | | | |
| E-1 (wt part) | - | - | - | - | - | - |
| E-2 (wt part) | - | - | - | - | - | - |
| Results of evaluation | | | | | | |
| Color tone | | | | | | |
| YI value (-) | 3.6 | 4.4 | 1.5 | 3.9 | 2.2 | 20.1 |
| Hydrolysis resistance | | | | | | |
| IV before test (dL/g) | 0.683 | 0.661 | 0.654 | 0.608 | 0.622 | 0.761 |
| IV after test (dL/g) | 0.527 | 0.527 | 0.489 | 0.475 | 0.549 | 0.663 |
| Rate of retention of IV before and after test (%) | 77 | 80 | 75 | 78 | 88 | 87 |

Table 2

| | Comparative Examples | | | |
|---|---|---|---|---|
| | 1A | 2A | 3A | 4A |
| Components blended | | | | |
| Component A | | | | |
| PC-1 (wt part) | 70 | 70 | 70 | 70 |
| Component B | | | | |
| PCC (A)- 1 (wt part) | - | 30 | - | 30 |
| PCC (A)- 2 (wt part) | 30 | - | 30 | - |
| Component C | | | | |
| C- 1a (wt part) | - | - | - | - |
| C- 2 (wt part) | - | - | - | - |
| C- 3 (wt part) | - | - | - | - |
| Component E | | | | |
| E- 1 (wt part) | 0.1 | 0.1 | - | - |
| E- 2 (wt part) | - | - | 0.1 | - |

(continued)

| Results of evaluation | | | | |
|---|---|---|---|---|
| Color tone | | | | |
| YI value (-) | 6.3 | 5.9 | 10 | 47.6 |
| Hydrolysis resistance | | | | |
| IV before test (dL/g) | 0.622 | 0.701 | 0.619 | 0.751 |
| IV after test (dL/g) | 0.174 | 0.189 | 0.186 | 0.676 |
| Rate of retention of IV before and after test (%) | 28 | 27 | 30 | 90 |

As apparently recognized from the results shown in the above Tables 1 and 2, in Comparative Example 4A in which the resin composition contained the aromatic polycarbonate resin (A) and the alicyclic polyester resin (B) but contained no organic phosphoric ester metal salt (component C), the resultant resin composition was considerably deteriorated in YI although it exhibited a good hydrolysis resistance. In Comparative Examples 1A to 3A in which the resin compositions contained no component C but contained the component E, i.e., phosphorous acid or polyphosphoric acid, the resultant resin compositions were considerably deteriorated in hydrolysis resistance although they exhibited a good YI. On the other hand, in Examples 1A to 6A in which the resin compositions contained the phosphoric ester metal salt as defined in the present invention, the resultant resin compositions all exhibited excellent YI and hydrolysis resistance in a well-balanced condition.

The resin composition of the present invention exhibiting a relatively small yellowness index, a less coloration and an excellent hydrolysis resistance is useful especially as a resin composition used in application fields of molded products requiring a high-temperature sterilization treatment such as medical equipments.

Examples 1B to 14B and Comparative Examples 1B to 13B:

The respective components as shown in Table 3 to 6 were uniformly mixed with each other using a tumbler mixer. Then, using a twin-screw extruder "TEX30XCT" (L/D = 42; number of barrels: 12) manufactured by Nippon Seikosho Co., Ltd., the resultant mixture was fed to the extruder through a barrel 1 thereof, melt-kneaded therein at cylinder temperature of 270°C and a screw rotating speed of 200 rpm, and extruded therefrom, thereby obtaining a resin composition in the form of pellets.

The pellets obtained by the above method were dried at 120°C for not less than 4 hr, and then molded using an injection molding machine "M150AII-SJ Model" manufactured by Meiki Seisakusho Co., Ltd., at a cylinder temperature of 280°C and a mold temperature of 80°C for a molding cycle time of 55 sec, thereby producing an ASTM test specimen (notched test piece having a thickness of 3.2 mm) and a flat plate-shaped molded product (90 mm x 50 mm x 3 mm in thickness). Also, the flat plate-shaped molded product was subjected to retention molding at a molding time of 5 min for each cycle, and the retention molded products subsequent to the 5th shot were respectively subjected to evaluation of the following properties. The results are shown in Tables 3 to 6.

(1) Fluidity (Q value):

Using a high load-type flow tester, the amount of the resin composition discharged per unit time (Q value; unit: cc/sec) was measured at 280°C under a load of 160 $kgf/cm^2$ to evaluate a fluidity thereof. Meanwhile, an orifice used had a diameter of 1 mm and a length of 10 mm. The higher the Q value, the more excellent the fluidity of the resin composition.

(2) Transparency:

According to JIS K-7105, the total light transmittance of the above-produced flat plate-shaped molded product (90 mm x 50 mm x 3 mm in thickness) was measured using a turbidity meter "NDH-2000 Model" manufactured by Nippon Denshoku Kogyo Co., Ltd. The larger the total light transmittance, the more excellent the transparency of the resin composition.

(3) Hue:

The YI value of the above-produced flat plate-shaped molded product (90 mm x 50 mm x 3 mm in thickness)

was measured by a transmission method using a spectroscopic colorimeter "SE2000 Model" manufactured by Nippon Denshoku Kogyo Co., Ltd. The smaller the YI value, the more excellent the hue of the resin composition.

(4) Impact resistance (Izod impact strength):

According to ASTM D256, the above-produced ASTM test specimen (notched test piece having a thickness of 3.2 mm) was tested to measure an Izod impact strength thereof (unit: J/m) at 23°C.

(5) Wet-heat resistance:

The pellets of the resin composition were subjected to wet-heat treatment at 70°C and 95% RH for 500 hr, and then the amount (Q value) of the resin composition discharged was measured by the same method as used in the above (1). From the Q values before and after the wet-heat test, the rate of increase of Q value was calculated according to the following formula. The smaller the rate of increase of Q value, the less the reduction of molecular weight of the resin composition and the more excellent the wet-heat resistance of the resin composition.

Rate of increase of Q value = [(Q value after wet-heat test) - (Q value before wet-heat test)]/(Q value before wet-heat test) x 100

(6) Retention heat stability:

(a) Surface appearance:

The surface appearance of the above-produced flat plate-shaped molded product (90 mm x 50 mm x 3 mm in thickness) was observed by naked eyes, and evaluated as follows.

O: No surface roughening due to silver streak.

×: Severe surface roughening due to silver streak.

(b) Impact resistance (Izod impact strength):

According to ASTM D256, the above-produced ASTM test specimen (notched test piece having a thickness of 3.2 mm) was tested to measure an Izod impact strength thereof (unit: J/m) at 23°C.

Table 3

| | | Examples | | |
|---|---|---|---|---|
| | | 1B | 2B | 3B |
| Components blended (wt part) | | | | |
| Component (A) | PC-1 | 90 | 90 | 90 |
| | PC-2 | - | - | - |
| | PC-3 | - | - | - |
| Component (B) | PCC(B)-1 | 10 | 10 | 10 |
| | PCC(B)-2 | - | - | - |
| Component (C) | C-1a | 0.02 | 0.03 | 0.03 |
| | C-1b | - | - | - |
| Component (D) | D-1 | 0.01 | - | - |
| | D-2 | - | 0.03 | - |
| | D-3 | - | - | 0.05 |
| | D-4 | - | - | - |
| | D-5 | - | - | - |
| Component (E) | E-1 | - | - | - |
| | E-2 | - | - | - |
| | E-3 | - | - | - |
| | E-4 | - | - | - |
| (F) | F-1 | - | - | - |
| Other components | Antioxidant | - | - | - |
| | Mold release agent | - | - | - |
| Results of evaluation | | | | |
| Fluidity | Q value ($x10^{-2}cc/s$) | 10.5 | 10.3 | 10.4 |
| Transparency | Total light transmittance (%) | 90.03 | 90.19 | 90.16 |
| Hue | YI (-) | 1.37 | 1.21 | 1.25 |
| Impact resistance | Izod impact strength (J/m) | 750 | 765 | 760 |
| Wet-heat resistance* | Q value ($x10^{-2}cc/s$) | 12.7 | 12.2 | 12.4 |
| | Rate of increase of Q value (%) | 21 | 18 | 19 |
| Retention heat stability | Surface appearance (-) | ○ | ◎ | ◎ |
| | Izod impact strength (J/m) | 450 | 650 | 660 |

Note *: After wet-heated at 70°C and 95% RH for 500 hr.

Table 3 (continued)

| | | Examples | | | |
|---|---|---|---|---|---|
| | | 4B | 5B | 6B | 7B |
| Components blended (wt part) | | | | | |
| Component (A) | PC-1 | 90 | 90 | - | 70 |
| | PC-2 | - | - | 90 | - |
| | PC-3 | - | - | - | - |
| Component (B) | PCC(B)-1 | 10 | - | - | 30 |
| | PCC(B)-2 | - | 10 | 10 | - |
| Component (C) | C-1a | 0.02 | 0.03 | 0.03 | 0.03 |
| | C-1b | - | - | - | - |
| Component (D) | D-1 | 0.01 | - | - | - |
| | D-2 | 0.03 | 0.03 | 0.03 | 0.03 |
| | D-3 | - | - | - | - |
| | D-4 | - | - | - | - |
| | D-5 | - | - | - | - |
| Component (E) | E-1 | - | - | - | - |
| | E-2 | - | - | - | - |
| | E-3 | - | - | - | - |
| | E-4 | - | - | - | - |
| (F) | F-1 | - | - | - | - |
| Other components | Antioxidant | - | - | - | - |
| | Mold release agent | - | - | - | - |
| Results of evaluation | | | | | |
| Fluidity | Q value ($x10^{-2}$cc/s) | 10.6 | 13.2 | 47.8 | 17.5 |
| Transparency | Total light transmittance (%) | 90.20 | 90.23 | 90.33 | 90.45 |
| Hue | YI (-) | 1.19 | 1.16 | 0.78 | 1.17 |
| Impact resistance | Izod impact strength (J/m) | 750 | 680 | 175 | 720 |
| Wet-heat resistance* | Q value ($x10^{-2}$cc/s) | 14.5 | 15.7 | 56.5 | 21.2 |
| | Rate of increase of Q value (%) | 37 | 19 | 18 | 21 |
| Retention heat stability | Surface appearance (-) | ◎ | ◎ | ◎ | ◎ |
| | Izod impact strength (J/m) | 620 | 590 | 145 | 585 |

Note *: After wet-heated at 70°C and 95% RH for 500 hr.

Table 4

| | | Examples | | |
|---|---|---|---|---|
| | | 8B | 9B | 10B |
| Components blended (wt part) | | | | |
| Component (A) | PC-1 | 30 | - | 70 |
| | PC-2 | - | 90 | - |
| | PC-3 | 30 | - | - |
| Component (B) | PCC(B)-1 | 40 | - | 30 |
| | PCC(B)-2 | - | 10 | - |
| Component (C) | C-1a | 0.03 | 0.03 | 0.03 |
| | C-1b | - | - | - |
| Component (D) | D-1 | - | - | - |
| | D-2 | 0.03 | 0.03 | 0.03 |
| | D-3 | - | - | - |
| | D-4 | - | - | - |
| | D-5 | - | - | - |
| Component (E) | E-1 | - | - | - |
| | E-2 | - | - | - |
| | E-3 | - | - | - |
| | E-4 | - | - | - |
| (F) | F-1 | - | 0.5 | - |
| Other components | Antioxidant | - | - | 0.3 |
| | Mold release agent | - | - | - |
| Results of evaluation | | | | |
| Fluidity | Q value ($x10^{-2}cc/s$) | 14.2 | 54.1 | 17.8 |
| Transparency | Total light transmittance (%) | 90.53 | 90.49 | 90.44 |
| Hue | YI (-) | 1.19 | 0.69 | 1.18 |
| Impact resistance | Izod impact strength (J/m) | 830 | 126 | 700 |
| Wet-heat resistance* | Q value ($x10^{-2}cc/s$) | 17.4 | 64.8 | 21.7 |
| | Rate of increase of Q value (%) | 23 | 20 | 22 |
| Retention heat stability | Surface appearance (-) | ◎ | ◎ | ◎ |
| | Izod impact strength (J/m) | 550 | 95 | 560 |

Note *: After wet-heated at 70°C and 95% RH for 500 hr.

Table 4 (continued)

| | | Examples | | | |
|---|---|---|---|---|---|
| | | 11B | 12B | 13B | 14B |
| Components blended (wt part) | | | | | |
| Component (A) | PC-1 | 70 | 90 | 90 | 90 |
| | PC-2 | - | - | - | - |
| | PC-3 | - | - | - | - |
| Component (B) | PCC(B)-1 | 30 | 10 | 10 | 10 |
| | PCC(B)-2 | - | - | - | - |
| Component (C) | C-1a | 0.03 | - | - | - |
| | C-1b | - | 0.03 | 0.03 | 0.03 |
| Component (D) | D-1 | - | - | - | - |
| | D-2 | 0.03 | 0.03 | - | - |
| | D-3 | - | - | - | - |
| | D-4 | - | - | 0.03 | - |
| | D-5 | - | - | - | 0.03 |
| Component (E) | E-1 | - | - | - | - |
| | E-2 | - | - | - | - |
| | E-3 | - | - | - | - |
| | E-4 | - | - | - | - |
| (F) | F-1 | - | - | - | - |
| Other components | Antioxidant | - | - | - | - |
| | Mold release agent | 0.3 | - | - | - |
| Results of evaluation | | | | | |
| Fluidity | Q value ($x10^{-2}$cc/s) | 18.2 | 10.3 | 10.3 | 10.2 |
| Transparency | Total light transmittance (%) | 90.43 | 90.24 | 90.09 | 90.09 |
| Hue | YI (-) | 1.17 | 1.12 | 1.28 | 1.35 |
| Impact resistance | Izod impact strength (J/m) | 720 | 740 | 780 | 745 |
| Wet-heat resistance* | Q value ($x10^{-2}$cc/s) | 22.0 | 13.2 | 11.9 | 12.1 |
| | Rate of increase of Q value (%) | 21 | 28 | 16 | 19 |
| Retention heat stability | Surface appearance (-) | ◎ | ◎ | ◎ | ◎ |
| | Izod impact strength (J/m) | 555 | 630 | 730 | 725 |

Note *: After wet-heated at 70°C and 95% RH for 500 hr.

Table 5

| | | Comparative Examples | | |
|---|---|---|---|---|
| | | 1B | 2B | 3B |
| Components blended (wt part) | | | | |
| Component (A) | PC-1 | 100 | 90 | 90 |
| | PC-2 | - | - | - |
| | PC-3 | - | - | - |
| Component (B) | PCC(B)-1 | - | 10 | 10 |
| | PCC(B)-2 | - | - | - |
| Component (C) | C-1a | - | - | - |
| | C-1b | - | - | - |
| Component (D) | D-1 | - | - | - |
| | D-2 | - | - | - |
| | D-3 | - | - | - |
| | D-4 | - | - | - |
| | D-5 | - | - | - |
| Component (E) | E-1 | - | - | 0.03 |
| | E-2 | - | - | - |
| | E-3 | - | - | - |
| | E-4 | - | - | - |
| (F) | F-1 | - | - | - |
| Other components | Antioxidant | - | - | - |
| | Mold release agent | - | - | - |
| Results of evaluation | | | | |
| Fluidity | Q value ($x10^{-2}cc/s$) | 8.0 | 10.5 | 10.8 |
| Transparency | Total light transmittance (%) | 89.57 | 89.00 | 89.51 |
| Hue | YI (-) | 1.90 | 4.44 | 2.65 |
| Impact resistance | Izod impact strength (J/m) | 760 | 765 | 375 |
| Wet-heat resistance* | Q value ($x10^{-2}cc/s$) | 8.2 | 11.4 | 42.0 |
| | Rate of increase of Q value (%) | 2 | 9 | 289 |
| Retention heat stability | Surface appearance (-) | ◎ | ◎ | × |
| | Izod impact strength (J/m) | 730 | 590 | 92 |

Note *: After wet-heated at 70°C and 95% RH for 500 hr.

Table 5 (continued)

| | | Comparative Examples | | | |
|---|---|---|---|---|---|
| | | 4B | 5B | 6B | 7B |
| Components blended (wt part) | | | | | |
| Component (A) | PC-1 | 90 | 90 | 90 | 90 |
| | PC-2 | - | - | - | - |
| | PC-3 | - | - | - | - |
| Component (B) | PCC(B)-1 | 10 | 10 | 10 | 10 |
| | PCC(B)-2 | - | - | - | - |
| Component (C) | C-1a | - | - | - | - |
| | C-1b | - | - | - | - |
| Component (D) | D-1 | - | - | - | - |
| | D-2 | - | - | - | - |
| | D-3 | - | - | - | - |
| | D-4 | - | - | - | - |
| | D-5 | - | - | - | - |
| Component (E) | E-1 | 0.1 | - | - | - |
| | E-2 | - | - | - | - |
| | E-3 | - | 0.03 | 0.1 | - |
| | E-4 | - | - | - | 0.1 |
| (F) | F-1 | - | - | - | - |
| Other components | Antioxidant | - | - | - | - |
| | Mold release agent | - | - | - | - |
| Results of evaluation | | | | | |
| Fluidity | Q value ($x10^{-2}cc/s$) | 11.6 | 10.7 | 11.6 | 10.3 |
| Transparency | Total light transmittance (%) | 89.44 | 89.48 | 89.41 | 89.31 |
| Hue | YI (-) | 2.95 | 2.82 | 2.99 | 3.92 |
| Impact resistance | Izod impact strength (J/m) | 120 | 340 | 125 | 710 |
| Wet-heat resistance* | Q value ($x10^{-2}cc/s$) | 85.0 | 44.0 | 90.0 | 13.2 |
| | Rate of increase of Q value (%) | 633 | 311 | 676 | 28 |
| Retention heat stability | Surface appearance (-) | × | × | × | ○ |
| | Izod impact strength (J/m) | 42 | 85 | 45 | 600 |

Note *: After wet-heated at 70°C and 95% RH for 500 hr.

Table 6

| | | Comparative Examples | | |
|---|---|---|---|---|
| | | 8B | 9B | 10B |
| Components blended (wt part) | | | | |
| Component (A) | PC-1 | 90 | 90 | 90 |
| | PC-2 | - | - | - |
| | PC-3 | - | - | - |
| Component (B) | PCC(B)-1 | 10 | 10 | 10 |
| | PCC(B)-2 | - | - | - |
| Component (C) | C-1a | - | - | - |
| | C-1b | - | - | - |
| Component (D) | D-1 | 0.03 | 0.1 | - |
| | D-2 | - | - | 0.03 |
| | D-3 | - | - | - |
| | D-4 | - | - | - |
| | D-5 | - | - | - |
| Component (E) | E-1 | - | - | - |
| | E-2 | - | - | - |
| | E-3 | - | - | - |
| | E-4 | - | - | - |
| (F) | F-1 | - | - | - |
| Other components | Antioxidant | - | - | - |
| | Mold release agent | - | - | - |
| Results of evaluation | | | | |
| Fluidity | Q value ($x10^{-2}cc/s$) | 10.6 | 11.2 | 10.1 |
| Transparency | Total light transmittance (%) | 89.87 | 89.51 | 89.76 |
| Hue | YI (-) | 1.52 | 2.23 | 1.91 |
| Impact resistance | Izod impact strength (J/m) | 450 | 175 | 760 |
| Wet-heat resistance* | Q value ($x10^{-2}cc/s$) | 23.2 | 58.0 | 12.7 |
| | Rate of increase of Q value (%) | 119 | 418 | 26 |
| Retention heat stability | Surface appearance (-) | × | × | ◎ |
| | Izod impact strength (J/m) | 115 | 65 | 615 |

Note *: After wet-heated at 70°C and 95% RH for 500 hr.

Table 6 (continued)

| | | Comparative Examples | | |
|---|---|---|---|---|
| | | 11B | 12B | 13B |
| Components blended (wt part) | | | | |
| Component (A) | PC-1 | 90 | 90 | 90 |
| | PC-2 | - | - | - |
| | PC-3 | - | - | - |
| Component (B) | PCC(B)-1 | 10 | 10 | 10 |
| | PCC(B)-2 | - | - | - |
| Component (C) | C-1a | - | - | - |
| | C-1b | - | - | - |
| Component (D) | D-1 | - | - | - |
| | D-2 | 0.1 | - | - |
| | D-3 | - | - | - |
| | D-4 | - | 0.03 | 0.1 |
| | D-5 | - | - | - |
| Component (E) | E-1 | - | - | - |
| | E-2 | - | - | - |
| | E-3 | - | - | - |
| | E-4 | - | - | - |
| (F) | F-1 | - | - | - |
| Other components | Antioxidant | - | - | - |
| | Mold release agent | - | - | - |
| Results of evaluation | | | | |
| Fluidity | Q value ($x10^{-2}$cc/s) | 10.2 | 10.3 | 10.4 |
| Transparency | Total light transmittance (%) | 89.91 | 89.35 | 89.61 |
| Hue | YI (-) | 1.59 | 3.25 | 2.40 |
| Impact resistance | Izod impact strength (J/m) | 755 | 745 | 740 |
| Wet-heat resistance* | Q value ($x10^{-2}$cc/s) | 51.0 | 12.2 | 12.5 |
| | Rate of increase of Q value (%) | 400 | 18 | 20 |
| Retention heat stability | Surface appearance (-) | ◎ | ◎ | ◎ |
| | Izod impact strength (J/m) | 630 | 610 | 600 |

Note *: After wet-heated at 70°C and 95% RH for 500 hr.

(1) The resin compositions obtained in Examples 1B to 14B contained the specific organic phosphoric ester metal salt (C) and the specific phosphorus-based compound (D) within the respective content ranges as defined by the present invention, and exhibited excellent transparency and hue as well as an excellent balance between fluidity, impact resistance, wet-heat resistance and retention heat stability. In particular, when used in the applications requiring a high transparency, the transparency of these resin compositions was as high as more than 90% in terms of a total light transmittance. Therefore, the resin composition of the present invention exhibited a sufficient advantage as compared to those having a total light transmittance of not more than 90%, whereby it was recognized that the

effect of the present invention is extremely high. In addition, in Examples 6B and 9B in which the aromatic polycarbonate resins (A) used had a relatively small molecular weight, the resin compositions obtained by using such resins exhibited a good fluidity, resulting in an extremely excellent hue thereof.

(2) The resin composition of Comparative Example 1B containing no alicyclic polyester resin (B) was deteriorated especially in transparency and fluidity as compared to those resin compositions obtained in Examples of the present invention.

(3) The resin compositions of Comparative Examples 2B to 7B containing neither the specific organic phosphoric ester metal salt (C) nor the specific phosphorus-based compound (D) were deteriorated in transparency and hue as compared to those resin compositions obtained in Examples of the present invention. Further, the resin compositions of Comparative Examples 3B to 6B were also deteriorated in impact resistance, wet-heat resistance and retention heat stability.

(4) The resin compositions of Comparative Examples 8B to 13B containing no specific organic phosphoric ester metal salt (C) were deteriorated in transparency and hue as compared to those resin compositions obtained in Examples of the present invention. In addition, the resin compositions of Comparative Examples 8B, 9B and 11B were also deteriorated in wet-heat resistance, and the resin compositions of Comparative Examples 8B and 11B were further deteriorated in retention heat stability.

The resin composition of the present invention which is excellent in transparency, hue, fluidity, impact resistance and wet-heat resistance in a well-balanced condition can be suitably used in extensive application fields including various optical parts or members such as optical discs, optical films, lenses, optical transmission cables and windows for light-emitted devices; various covers such as illumination covers; various housings for personal computers, televisions, cellular phones, etc.; electric and electronic parts and OA equipment parts such as sensors and switches; various automobile parts such as headlamp lenses, inner lenses, room lamp lenses and meter panels and windows; various building materials such as roof materials; outdoor sports goods and leisure goods such as goggles (underwater spectacles); sundries such as propelling pencils, ball point pens and toothbrushes; and various containers such as bottles and plastic bags. In particular, it is expected that the resin composition of the present invention can be suitably applied to various optical parts or members requiring good transparency and a good hue.

## Claims

**1.** A resin composition comprising:

100 parts by weight of a mixture comprising (A) 1 to 99 parts by weight of an aromatic polycarbonate resin and (B) 1 to 99 parts by weight of an alicyclic polyester resin; and

(C) 0.001 to 5 parts by weight of at least one organic phosphoric ester metal salt selected from the group consisting of organic phosphoric ester metal salts represented by the following general formulae (1), (2), (3) and (4):

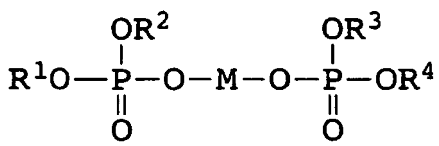

(1)

wherein $R^1$ to $R^4$ are respectively an alkyl group or an aryl group and may be the same or different; and M is a metal selected from the group consisting of alkali earth metals and zinc,

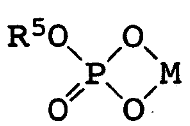

(2)

wherein $R^5$ is an alkyl group or an aryl group; and M is a metal selected from the group consisting of alkali earth

metals and zinc,

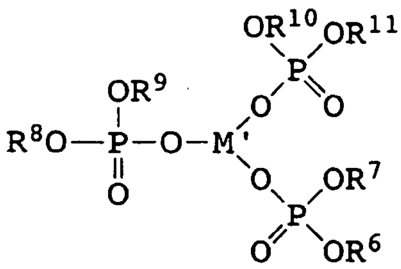

(3)

wherein $R^6$ to $R^{11}$ are respectively an alkyl group or an aryl group and may be the same or different; and M' is a metal atom capable of forming a trivalent metal ion, and

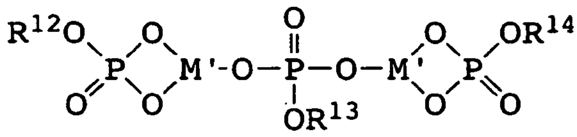

(4)

wherein $R^{12}$ to $R^{14}$ are respectively an alkyl group or an aryl group and may be the same or different; and M' is a metal atom capable of forming a trivalent metal ion and the two M' groups may be the same or different.

2. A resin composition according to claim 1, wherein the resin composition has an intrinsic viscosity retention rate of not less than 70% and a yellowness index of not more than 10 as measured after being exposed to a water vapor atmosphere at 120°C under 0.11 MPa within a pressure cooker tester.

3. A resin composition comprising:

100 parts by weight of a mixture comprising (A) 1 to 99 parts by weight of an aromatic polycarbonate resin and (B) 1 to 99 parts by weight of an alicyclic polyester resin;
(C) 0.001 to 5 parts by weight of at least one organic phosphoric ester metal salt selected from the group consisting of organic phosphoric ester metal salts represented by the general formulae (1), (2), (3) and (4) as defined in claim 1; and
(D) 0.001 to 1 part by weight of at least one phosphorus-based compound selected from the group consisting of phosphoric esters represented by the following general formula (5), phosphorous esters represented by the following general formula (6) and phosphonites represented by the following general formula (7):

$$O{=}P(OH)_n(OR)_{3-n} \qquad (5)$$

wherein R is an alkyl group or an aryl group and the plural R groups, if any, may be the same or different; and n is an integer of 0 to 2, and

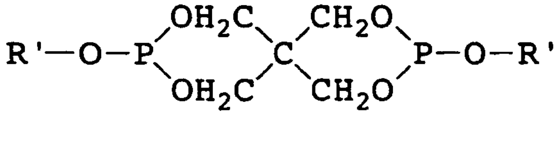

(6)

wherein R' is an alkyl group or an aryl group and the two R' groups may be the same or different, and

$$(R_bO)_2PR_a\text{-}R_aP(OR_b)_2 \qquad (7)$$

wherein $R_a$ is an aryl group or an arylene group; $R_b$ is an alkyl group or an aryl group; and the plural $R_a$ groups and the plural $R_b$ groups may be respectively the same or different.

**4.** A resin composition according to claim 3, wherein the organic phosphoric ester metal salt (C) and the phosphorous ester represented by the general formula (6) are respectively contained in an amount of from 0.003 to 0.3 part by weight on the basis of 100 parts by weight of a total amount of the aromatic polycarbonate resin (A) and the alicyclic polyester resin (B).

**5.** A resin composition according to claim 3 or 4, wherein the organic phosphoric ester metal salt (C) is a mixture of the organic phosphoric ester metal salt represented by the general formula (1) and the organic phosphoric ester metal salt represented by the general formula (2), and the $R^1$ to $R^5$ in the general formulae (1) and (2) are respectively an alkyl group having 2 to 25 carbon atoms.

**6.** A resin composition according to any one of claims 3 to 5, further comprising a polyorganosiloxane having a phenyl group at least on a side chain thereof and a kinematic viscosity of 1 to 200 cSt as measured at 25°C in an amount of 0.01 to 1 part by weight on the basis of 100 parts by weight of a total amount of the aromatic polycarbonate resin (A) and the alicyclic polyester resin (B).

**7.** A resin composition according to any one of claims 1 to 6, wherein the alicyclic polyester resin (B) is a condensation product of an alicyclic dicarboxylic acid comprising 1,4-cyclohexanedicarboxylic acid as a main component and an alicyclic diol comprising 1,4-cyclohexane dimethanol as a main component.

**8.** A resin composition according to any one of claims 1 to 7, wherein the alicyclic polyester resin (B) has a melting point of not lower than 210°C and an end carboxylic acid concentration of not more than 30 equivalents/ton.

**9.** A molded product produced by molding the resin composition as defined in any one of claims 1 to 8.

## Patentansprüche

**1.** Harzzusammensetzung, umfassend:

100 Gew.-Teile einer Mischung, die (A) 1 bis 99 Gew.-Teile eines aromatischen Polycarbonatharzes und (B) 1 bis 99 Gew.-Teile eines alicyclischen Polyesterharzes umfasst; und
(C) 0,001 bis 5 Gew.-Teile von mindestens einem organischen Phosphorsäureester-Metallsalz, das aus der Gruppe ausgewählt wird, die aus den durch die folgenden allgemeinen Formeln (1), (2), (3) und (4) dargestellten organischen Phosphorsäureester-Metallsalzen besteht:

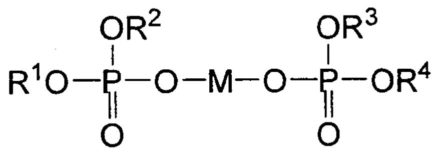
(1)

worin $R^1$ bis $R^4$ jeweils eine Alkylgruppe oder eine Arylgruppe darstellen und gleich oder verschieden sein können; und M ein Metall ist, das aus der Gruppe ausgewählt wird, die aus Erdalkalimetallen und Zink besteht,

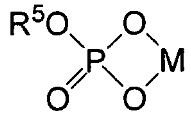
(2)

worin $R^5$ eine Alkylgruppe oder eine Arylgruppe ist; und M ein Metall ist, das aus der Gruppe ausgewählt wird, die aus Erdalkalimetallen und Zink besteht,

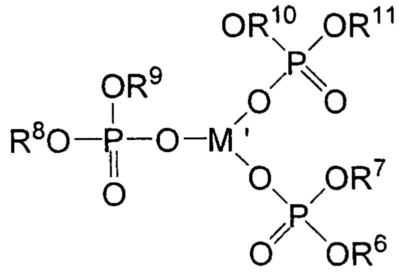

(3)

worin $R^6$ bis $R^{11}$ jeweils eine Alkylgruppe oder eine Arylgruppe sind und gleich oder verschieden sein können; und M' ein Metallatom ist, das geeignet ist, ein dreiwertiges Metallion zu bilden, und

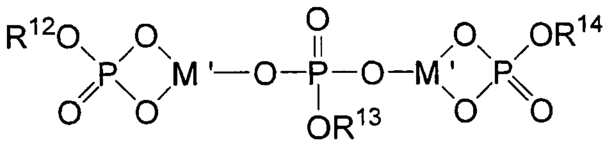

(4)

worin $R^{12}$ bis $R^{14}$ jeweils eine Alkylgruppe oder eine Arylgruppe sind und gleich oder verschieden sein können; und M' ein Metallatom ist, das geeignet ist, ein dreiwertiges Metallion zu bilden, und die beiden M'-Gruppen gleich oder verschieden sein können.

2. Harzzusammensetzung gemäss Anspruch 1, worin die Harzzusammensetzung eine Grenzviskositäts-Retentionsrate von nicht weniger als 70 % und eine Vergilbung von nicht mehr als 10, gemessen nachdem sie einer Wasserdampfatmosphäre bei 120°C unter 0,11 MPa mit einem Druckkochtopftester ausgesetzt worden war, aufweist.

3. Harzzusammensetzung, umfassend:

100 Gew.-Teile einer Mischung, die (A) 1 bis 99 Gew.-Teile eines aromatischen Polycarbonatharzes und (B) 1 bis 99 Gew.-Teile eines alicyclischen Polyesterharzes umfasst;
(C) 0,001 bis 5 Gew.-Teile von mindestens einem organischen Phosphorsäureester-Metallsalz, das aus der Gruppe ausgewählt wird, die aus organischen Phosphorsäureester-Metallsalzen besteht, die durch die allgemeinen Formeln (1), (2), (3) und (4), wie in Anspruch 1 definiert, dargestellt werden; und
(D) 0,001 bis 1 Gew.-Teile von mindestens einer Verbindung auf Phosphorbasis, die aus der Gruppe ausgewählt wird, die aus durch die folgende allgemeine Formel (5) dargestellten Phosphorsäureestern, durch die folgende allgemeine Formel (6) dargestellten Phosphorigsäureestern und durch die folgende allgemeine Formel (7) dargestellten Phosphoniten besteht:

$$O{=}P(OH)_n(OR)_{3-n} \qquad (5)$$

worin R eine Alkylgruppe oder eine Arylgruppe ist und mehrere R-Gruppen, wenn vorhanden, gleich oder verschieden sein können; und n eine ganze Zahl von 0 bis 2 ist, und

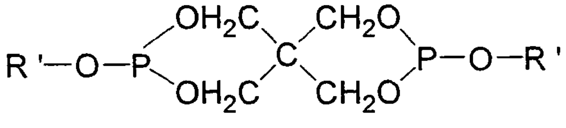

(6)

worin R' eine Alkylgruppe oder eine Arylgruppe ist und die beiden R'-Gruppen gleich oder verschieden sein können, und

$$(R_bO)_2PR_a\text{-}R_aP(OR_b)_2 \qquad (7)$$

worin $R_a$ eine Arylgruppe oder eine Arylengruppe ist; $R_b$ eine Alkylgruppe oder eine Arylgruppe ist; und mehrere $R_a$-Gruppen und mehrere $R_b$-Gruppen jeweils gleich oder verschieden sein können.

4. Harzzusammensetzung gemäss Anspruch 3, worin das organische Phosphorsäureester-Metallsalz (C) und der durch die allgemeine Formel (6) dargestellte Phosphorigsäureester jeweils in einer Menge von 0,003 bis 0,3 Gew.-Teilen, bezogen auf 100 Gew.-Teile einer Gesamtmenge aus dem aromatischen Polycarbonatharz (A) und dem alicyclischen Polyesterharz (B), enthalten sind.

5. Harzzusammensetzung gemäss Anspruch 3 oder 4, worin das organische Phosphorsäureester-Metallsalz (C) eine Mischung aus dem durch die allgemeine Formel (1) dargestellten organischen Phosphorsäureester-Metallsalz und dem durch die allgemeine Formel (2) dargestellten organischen Phosphorsäureester-Metallsalz ist, und $R^1$ bis $R^5$ in den allgemeinen Formeln (1) und (2) jeweils eine Alkylgruppe mit 2 bis 25 Kohlenstoffatomen sind.

6. Harzzusammensetzung gemäss mindestens einem der Ansprüche 3 bis 5, die ferner ein Polyorganosiloxan mit einer Phenylgruppe zumindest an einer seiner Seitenketten und einer kinematischen Viskosität von 1 bis 200 cSt, gemessen bei 25°C in einer Menge von 0,01 bis 1 Gew.-Teilen, bezogen auf 100 Gew.-Teile einer Gesamtmenge aus dem aromatischen Polycarbonatharz (A) und dem alicyclischen Polyesterharz (B), umfasst.

7. Harzzusammensetzung gemäss mindestens einem der Ansprüche 1 bis 6, worin das alicyclische Polyesterharz (B) ein Kondensationsprodukt aus einer alicyclischen Dicarbonsäure, die 1,4-Cyclohexandicarbonsäure als Hauptkomponente umfasst, und einem alicyclischen Diol ist, das 1,4-Cyclohexandimethanol als Hauptkomponente umfasst.

8. Harzzusammensetzung gemäss mindestens einem der Ansprüche 1 bis 7, worin das alicyclische Polyesterharz (B) einen Schmelzpunkt von nicht niedriger als 210°C und eine Carbonsäure-Endkonzentration von nicht mehr als 30 Äquivalenten/t aufweist.

9. Geformtes Produkt, das durch Formen der Harzzusammensetzung hergestellt wird, die in mindestens einem der Ansprüche 1 bis 8 definiert ist.

## Revendications

1. Composition de résine comprenant :

100 parties en poids d'un mélange comprenant (A) 1 à 99 parties en poids d'une résine de polycarbonate aromatique et (B) 1 à 99 parties en poids d'une résine de polyester alicyclique ; et
(C) 0,001 à 5 parties en poids d'au moins un sel métallique d'ester phosphorique organique sélectionné dans le groupe constitué par les sels métalliques d'ester phosphorique organique représentés par les formules générales (1), (2), (3) et (4) suivantes :

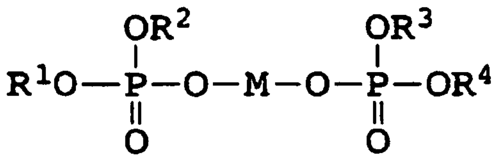
(1)

dans laquelle $R^1$ à $R^4$ sont respectivement un groupe alkyle ou un groupe aryle et peuvent être les mêmes ou différents ; et M est un métal sélectionné dans le groupe constitué par des métaux alcalino-terreux et le zinc,

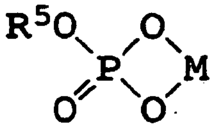

(2)

dans laquelle $R^5$ est un groupe alkyle ou un groupe aryle ; et M est un métal sélectionné dans le groupe constitué par des métaux alcalino-terreux et le zinc,

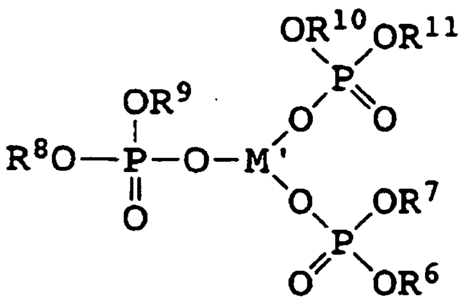

(3)

dans laquelle $R^6$ à $R^{11}$ sont respectivement un groupe alkyle ou un groupe aryle et peuvent être les mêmes ou différents ; et M' est un atome de métal capable de former un ion métallique trivalent, et

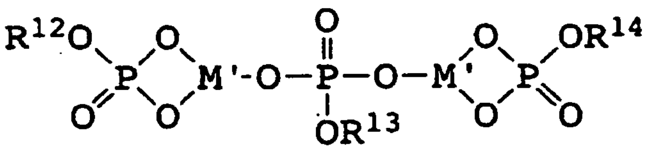

(4)

dans laquelle $R^{12}$ à $R^{14}$ sont respectivement un groupe alkyle ou un groupe aryle et peuvent être les mêmes ou différents ; et M' est un atome de métal capable de former un ion métallique trivalent et les deux groupes M' peuvent être les mêmes ou différents.

**2.** Composition de résine selon la revendication 1, la composition de résine ayant un taux de rétention de viscosité intrinsèque non inférieur à 70 % et un indice de couleur jaune non supérieur à 10, tels que mesurés après être exposée à une atmosphère de vapeur d'eau à 120 °C sous 0,11 MPa dans un testeur de type autoclave.

**3.** Composition de résine comprenant :

100 parties en poids d'un mélange comprenant (A) 1 à 99 parties en poids d'une résine de polycarbonate aromatique et (B) 1 à 99 parties en poids d'une résine de polyester alicyclique ;
(C) 0,001 à 5 parties en poids d'au moins un sel métallique d'ester phosphorique organique sélectionné dans le groupe constitué par des sels métalliques d'ester phosphorique organique représentés par les formules générales (1), (2), (3) et (4) telles que définies dans la revendication 1 ; et
(D) 0,001 à 1 partie en poids d'au moins un composé à base de phosphore sélectionné dans le groupe constitué par des esters phosphoriques représentés par la formule générale (5) suivante, des esters phosphoreux représentés par la formule générale (6) suivante et des phosphonites représentés par la formule générale (7) suivante :

$$O{=}P(OH)_n(OR)_{3-n} \qquad (5)$$

dans laquelle R est un groupe alkyle ou un groupe aryle et les divers groupes R, s'il en existe, peuvent être les mêmes ou différents ; et n est un nombre entier compris de 0 à 2, et

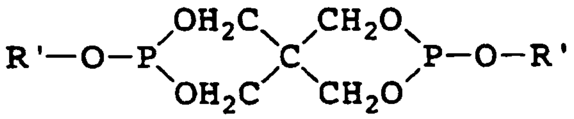
(6)

dans laquelle R' est un groupe alkyle ou un groupe aryle et les deux groupes R' peuvent être les mêmes ou différents, et

$$(R_bO)_2PR_a\text{-}R_aP(OR_b)_2 \qquad (7)$$

dans laquelle $R_a$ est un groupe aryle ou un groupe arylène ; $R_b$ est un groupe alkyle ou un groupe aryle ; et les divers groupes $R_a$ et les divers groupes $R_b$ peuvent être respectivement les mêmes ou différents.

**4.** Composition de résine selon la revendication 3, dans laquelle le sel métallique d'ester phosphorique organique (C) et l'ester phosphoreux représenté par la formule générale (6) sont respectivement contenus en une quantité comprise entre 0,003 et 0,3 partie en poids sur la base de 100 parties en poids d'une quantité totale de la résine de polycarbonate aromatique (A) et de la résine de polyester alicyclique (B).

**5.** Composition de résine selon la revendication 3 ou 4, dans laquelle le sel métallique d'ester phosphorique organique (C) est un mélange du sel métallique d'ester phosphorique organique représenté par la formule générale (1) et du sel métallique d'ester phosphorique organique représenté par la formule générale (2), et les $R^1$ à $R^5$ dans les formules générales (1) et (2) sont respectivement un groupe alkyle ayant 2 à 25 atomes de carbone.

**6.** Composition de résine selon l'une quelconque des revendications 3 à 5, comprenant en outre un polyorganosiloxane ayant un groupe phényle au moins sur une chaîne latérale de celui-ci et une viscosité cinématique de 1 à 200 cSt telle que mesurée à 25 °C en une quantité de 0,01 à 1 partie en poids sur la base de 100 parties en poids d'une quantité totale de la résine de polycarbonate aromatique (A) et de la résine de polyester alicyclique (B).

**7.** Composition de résine selon l'une quelconque des revendications 1 à 6, dans laquelle la résine de polyester alicyclique (B) est un produit de condensation d'un acide dicarboxylique alicyclique comprenant de l'acide 1,4-cyclohexanedicarboxylique en tant que composant principal et d'un diol alicyclique comprenant du 1,4-cyclohexane diméthanol en tant que composant principal.

**8.** Composition de résine selon l'une quelconque des revendications 1 à 7, dans laquelle la résine de polyester alicyclique (B) a un point de fusion non inférieur à 210 °C et une concentration finale d'acide carboxylique non supérieure à 30 équivalents/tonne.

**9.** Produit moulé produit par moulage de la composition de résine telle que définie dans l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5441997 A
- WO 9963002 A
- JP 54019422 A
- JP 11035807 A
- JP 2002509174 A


### Non-patent literature cited in the description


- *J. Phys.; Condens. Matter,* 1996, vol. 8, 3811-3827